(19) Europäisches Patentamt
European Patent Office
Office européen des brevets

(11) EP 4 783 079 A1

(12) EUROPEAN PATENT APPLICATION
published in accordance with Art. 153(4) EPC

(43) Date of publication:
29.07.2026 Bulletin 2026/31

(51) International Patent Classification (IPC):
G06N 99/00 (2019.01)

(21) Application number: 23956826.4

(52) Cooperative Patent Classification (CPC):
G06N 99/00

(22) Date of filing: 27.10.2023

(86) International application number:
PCT/JP2023/038818

(87) International publication number:
WO 2025/088775 (01.05.2025 Gazette 2025/18)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Mitsubishi Electric Corporation
Tokyo 100-8310 (JP)

(72) Inventors:
• MASUI, Hideyuki
  Tokyo 100-8310 (JP)
• NAKANE, Koki
  Tokyo 100-8310 (JP)

(74) Representative: Pfenning, Meinig & Partner mbB
Patent- und Rechtsanwälte
An der Frauenkirche 20
01067 Dresden (DE)

(54) INFORMATION PROCESSING DEVICE, INFORMATION PROCESSING METHOD, AND PROGRAM

(57) An information processing device includes: a machine learning unit (12) to learn a relationship between an evaluation value and a parameter on a basis of a search point of the parameter and an evaluation value of the search point, and predict the evaluation value for a search candidate point of the parameter; and a search progress acquiring unit (13) to acquire progress information indicating progress of a search on a basis of the search point, the evaluation value of the search point, the search candidate point, and the evaluation value of the search candidate point predicted by the machine learning unit (12).

FIG. 1

**Description**

TECHNICAL FIELD

The present disclosure relates to an information processing device, an information processing method, a program, a display device, and a display method.

BACKGROUND ART

Conventionally, Bayesian optimization, which is one of black box optimization methods, has been used as a method of optimizing a value of a parameter. Note that examples of the parameter include a hyperparameter of machine learning, a parameter of an installation environment of a mechanical device that can be formulated as a problem equivalent thereto, a parameter that determines an optimal operating condition for each task, a configuration of a device, or the like.

The Bayesian optimization is a method capable of efficiently searching for a parameter value with a good evaluation value, and it is possible to obtain an optimal parameter value by repeating the search. On the other hand, this Bayesian optimization may lead to a prolonged search.

In this point, in this Bayesian optimization, it is known that the search time can be further shortened by determining the number of searches or the target value and terminating the search (see, for example, Patent Literature 1).

CITATION LIST

PATENT LITERATURE

Patent Literature 1: WO 2021-024396 A1

SUMMARY OF INVENTION

TECHNICAL PROBLEM

As a problem of this optimization, information indicating the progress of the search is not acquired, and thus it may be difficult for the user to select whether to continue the search.

The present disclosure has been made to solve the above problems, and an object thereof is to provide an information processing device capable of acquiring information for reference as to whether to continue or end a search for a parameter.

SOLUTION TO PROBLEM

An information processing device according to the present disclosure includes: a machine learning unit to learn a relationship between an evaluation value and a parameter on the basis of a search point of the parameter and an evaluation value of the search point, and predict the evaluation value for a search candidate point of the parameter; and a search progress acquiring unit to acquire progress information indicating progress of a search on the basis of the search point, the evaluation value of the search point, the search candidate point, and the evaluation value of the search candidate point predicted by the machine learning unit.

ADVANTAGEOUS EFFECTS OF INVENTION

According to the present disclosure, with the above configuration, it is possible to acquire information for reference of whether to continue or end a search for a parameter.

BRIEF DESCRIPTION OF DRAWINGS

FIG. 1 is a diagram illustrating a configuration example of a parameter optimizing device according to a first embodiment.
FIG. 2 is a diagram illustrating a hardware configuration example of the parameter optimizing device according to the first embodiment.
FIG. 3 is a flowchart illustrating an operation example of the parameter optimizing device according to the first embodiment.

FIG. 4 is a diagram illustrating a calculation concept of a search progress by the parameter optimizing device according to the first embodiment.

FIG. 5 is a diagram illustrating a display concept of a search progress by the parameter optimizing device according to the first embodiment.

FIG. 6 is a diagram illustrating a configuration example of a parameter optimizing device according to a second embodiment.

FIG. 7 is a flowchart illustrating an operation example of the parameter optimizing device according to the second embodiment.

FIG. 8 is a diagram illustrating a display concept of search end determination by the parameter optimizing device according to the second embodiment.

FIG. 9 is a diagram illustrating a configuration example of a parameter optimizing device according to a third embodiment.

FIG. 10 is a flowchart illustrating an operation example of the parameter optimizing device according to the third embodiment.

FIG. 11 is a diagram illustrating a display concept of search end determination by the parameter optimizing device according to the third embodiment.

FIG. 12 is a diagram illustrating a configuration example of a parameter optimizing device according to a fourth embodiment.

FIG. 13 is a flowchart illustrating an operation example of the parameter optimizing device according to the fourth embodiment.

FIG. 14 is a diagram illustrating a calculation concept of a search progress by the parameter optimizing device according to the fourth embodiment.

FIG. 15 is a diagram illustrating a display concept of a search progress by the parameter optimizing device according to the fourth embodiment.

FIG. 16 is a diagram illustrating a configuration example of a parameter optimizing device according to a fifth embodiment.

FIG. 17 is a diagram illustrating an example of a refrigeration cycle in cooling of air-conditioning and cooling-heating equipment according to the fifth embodiment.

FIG. 18 is a flowchart illustrating an operation example of the parameter optimizing device according to the fifth embodiment.

DESCRIPTION OF EMBODIMENTS

Hereinafter, embodiments will be described in detail with reference to the drawings.

First Embodiment

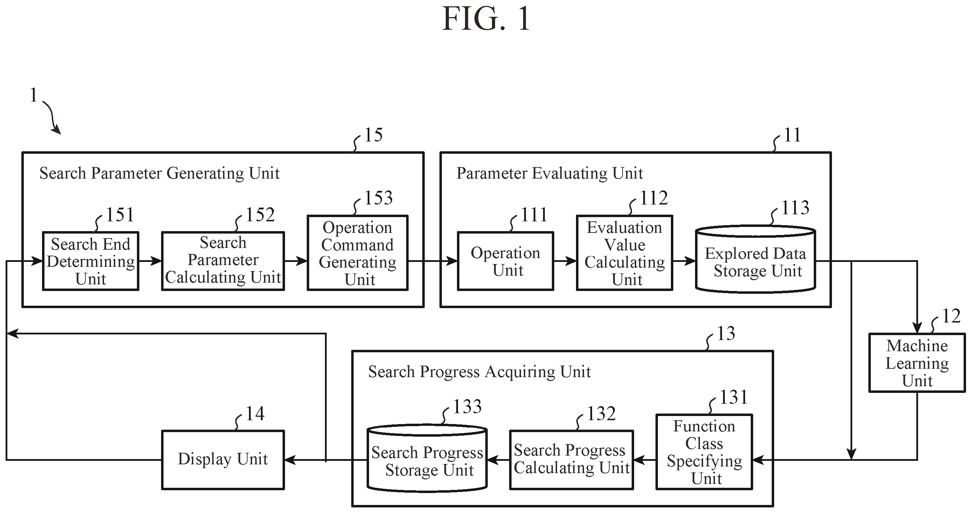

FIG. 1 is a diagram illustrating a configuration example of a parameter optimizing device 1 according to a first embodiment.

The parameter optimizing device 1 optimizes a value of a parameter. As illustrated in FIG. 1, the parameter optimizing device 1 includes a parameter evaluating unit 11, a machine learning unit 12, a search progress acquiring unit 13, a display unit 14, and a search parameter generating unit 15.

Note that the display unit 14 may be expressed as a display device. The display device may include an acquiring unit (not illustrated) that acquires progress information indicating the progress of a search for an optimal parameter by the parameter optimizing device 1.

In addition, the parameter optimizing device 1 may be expressed as an information processing device that processes information.

Note that the information processing device and the parameter optimizing device of the present disclosure do not need to include all components of the parameter optimizing device 1 described in FIG. 1 of the first embodiment. For example, any one or all of the parameter evaluating unit 11, the display unit 14, and the search parameter generating unit 15 may be removed. That is, even those extracted with only some components of the parameter optimizing device 1 in FIG. 1 also fall within the concepts of the information processing device and the parameter optimizing device of the present disclosure.

In addition, a component included in each unit may be appropriately removed as necessary. For example, a search progress calculating unit 132 included in the search progress acquiring unit 13 described below may be removed from the search progress acquiring unit 13. Note that, in a case where the information processing device includes at least a part of components of the search progress acquiring unit 13, the information processing device may be expressed as a search progress acquiring device.

In addition, the components included in the parameter optimizing device 1 may be arranged in different places. For example, the parameter evaluating unit 11 and the machine learning unit 12 may be stored in separate servers or the like that are separated from each other. At that time, processing of the present disclosure may be executed by communication from a communication unit included in each server via a network.

The parameter evaluating unit 11 acquires an evaluation value for a search point of a parameter on the basis of a determined search point of a parameter.

The evaluation value acquired by the parameter evaluating unit 11 and information indicating the search point of the corresponding parameter are output to the machine learning unit 12.

As illustrated in FIG. 1, the parameter evaluating unit 11 includes an operation unit 111, an evaluation value calculating unit 112, and an explored data storage unit 113.

The operation unit 111 causes an optimization target to operate at a search point of a parameter on the basis of the determined search point of the parameter. Examples of the optimization target include a machine learning model and a mechanical device.

Information indicating an operation result of the optimization target by the operation unit 111 is output to the evaluation value calculating unit 112.

The evaluation value calculating unit 112 calculates an evaluation value for the search point of the parameter used in the operation unit 111 on the basis of the operation result of the optimization target by the operation unit 111.

The evaluation value calculated by the evaluation value calculating unit 112 and information indicating the search point of the corresponding parameter are output to the explored data storage unit 113.

The explored data storage unit 113 stores the evaluation value calculated by the evaluation value calculating unit 112 and information indicating the search point of the corresponding parameter as explored data.

The explored data stored in the explored data storage unit 113 is read by the machine learning unit 12 and the search progress acquiring unit 13.

Note that FIG. 1 illustrates a case where the explored data storage unit 113 is provided inside the parameter optimizing device 1. However, it is not limited thereto, and the explored data storage unit 113 may be provided outside the parameter optimizing device 1.

The machine learning unit 12 learns the relationship between the evaluation value and the parameter on the basis of the evaluation value acquired by the parameter evaluating unit 11 and the search point of the corresponding parameter, and predicts an evaluation value for a search candidate point of a parameter. The search candidate point of the parameter is a point that is a candidate for the search point of the parameter.

Information indicating the evaluation value predicted by the machine learning unit 12 and the search candidate point of the corresponding parameter is output to the search progress acquiring unit 13.

The search progress acquiring unit 13 acquires progress information indicating the progress of the search on the basis of the evaluation value acquired by the parameter evaluating unit 11 and the search point of the corresponding parameter and the evaluation value predicted by the machine learning unit 12 and the search candidate point of the corresponding parameter. In a case where a search end determining unit 151 described later automatically determines whether or not to end the search as in the first embodiment, the progress of the search may be, for example, any one of a search progress rate that is a progress rate of the search for the search point and a progress rate based on the evaluation value of the search point. In addition, it is not limited thereto, and for example, one or more of an in-search optimal value, information regarding a search end, the remaining number of times of the search, or a global optimal value (expectation) may be included as the progress of the search, or each may be treated as information different from the progress. Note that the information regarding the search end may be information in any format as long as the information indicates that the search ends, such as a remaining time until the search ends, an end time of the parameter search, or a remaining search ratio. Note that a more detailed description of the progress will be given later.

The progress information indicating the progress of the search acquired by the search progress acquiring unit 13 is output to the display unit 14 and the search parameter generating unit 15.

As illustrated in FIG. 1, the search progress acquiring unit 13 includes a function class specifying unit 131, a search progress calculating unit 132, and a search progress storage unit 133. Note that the search progress acquiring unit 13 may include an output control unit (not illustrated) that performs control to output the progress information to the display unit 14.

The function class specifying unit 131 specifies a function class of the evaluation value on the basis of the evaluation value acquired by the parameter evaluating unit 11 and the search point of the corresponding parameter and the evaluation value predicted by the machine learning unit 12 and the search candidate point of the corresponding parameter. At this time, the function class specifying unit 131 specifies the function class of the evaluation value from a set of function classes of which global optimality is guaranteed.

Information indicating the function class specified by the function class specifying unit 131 is output to the search progress calculating unit 132.

The search progress calculating unit 132 calculates the progress of the search on the basis of the evaluation value acquired by the parameter evaluating unit 11 and the corresponding parameter, the evaluation value predicted by the machine learning unit 12 and the search candidate point of the corresponding parameter, and the function class specified by the function class specifying unit 131.

Progress information indicating the progress of the search calculated by the search progress calculating unit 132 is output to the search progress storage unit 133.

The search progress storage unit 133 stores the progress information indicating the progress of the search calculated by the search progress calculating unit 132.

The progress information indicating the progress of the search stored in the search progress storage unit 133 is read by the display unit 14 and the search parameter generating unit 15.

Note that FIG. 1 illustrates a case where the search progress storage unit 133 is provided inside the parameter optimizing device 1. However, it is not limited thereto, and the search progress storage unit 133 may be provided outside the parameter optimizing device 1.

The display unit 14 displays the progress information indicating the progress of the search on the basis of the progress information indicating the progress of the search acquired by the search progress acquiring unit 13.

Note that FIG. 1 illustrates a case where the display unit 14 is provided inside the parameter optimizing device 1. However, it is not limited thereto, and the display unit 14 may be provided outside the parameter optimizing device 1.

In addition, in the parameter optimizing device 1 according to the first embodiment, the display unit 14 is not an essential component, and the display unit 14 need not be provided.

The search parameter generating unit 15 determines a search point of a next parameter in the parameter evaluating unit 11 on the basis of the progress information indicating the progress of the search acquired by the search progress acquiring unit 13.

Information indicating the parameter determined by the search parameter generating unit 15 is output to the parameter evaluating unit 11 as a command value. Then, the parameter evaluating unit 11 repeats the above operation on the basis of the above parameter included in the command value from the search parameter generating unit 15.

As illustrated in FIG. 1, the search parameter generating unit 15 includes a search end determining unit 151, a search parameter calculating unit 152, and an operation command generating unit 153.

The search end determining unit 151 determines whether or not to end the search on the basis of the progress information indicating the progress of the search acquired by the search progress acquiring unit 13.

When the search end determining unit 151 determines not to end the search, that is, to continue the search, the search parameter calculating unit 152 determines a search point of a next parameter.

Information indicating the parameter determined by the search parameter calculating unit 152 is output to the operation command generating unit 153.

The operation command generating unit 153 generates a command value for the operation unit 111 on the basis of the parameter determined by the search parameter calculating unit 152.

The command value generated by the operation command generating unit 153 is output to the parameter evaluating unit 11 (operation unit 111).

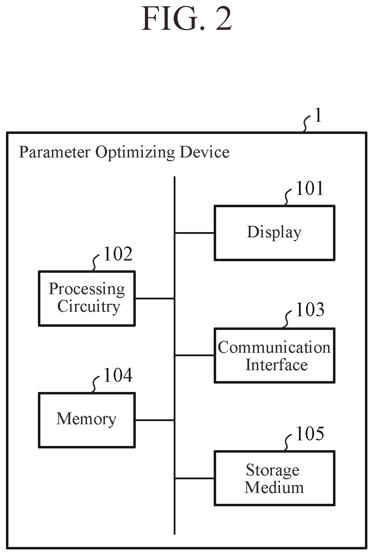

Next, a hardware configuration example of the parameter optimizing device 1 according to the first embodiment will be described with reference to FIG. 2.

The display unit 14 in the parameter optimizing device 1 is a display 101. The functions of the parameter evaluating unit 11, the machine learning unit 12, the search progress acquiring unit 13, and the search parameter generating unit 15 in the parameter optimizing device 1 are implemented by a processing circuitry 102. As illustrated in FIG. 2, the processing circuitry 102 is a central processing unit (may also be referred to as a CPU, a central processor, a processing device, an arithmetic device, a microprocessor, a microcomputer, a processor, or a digital signal processor (DSP)) that executes a program stored in a memory 104 or a storage medium 105. In addition, the parameter optimizing device 1 includes a communication interface 103 for an optimization target.

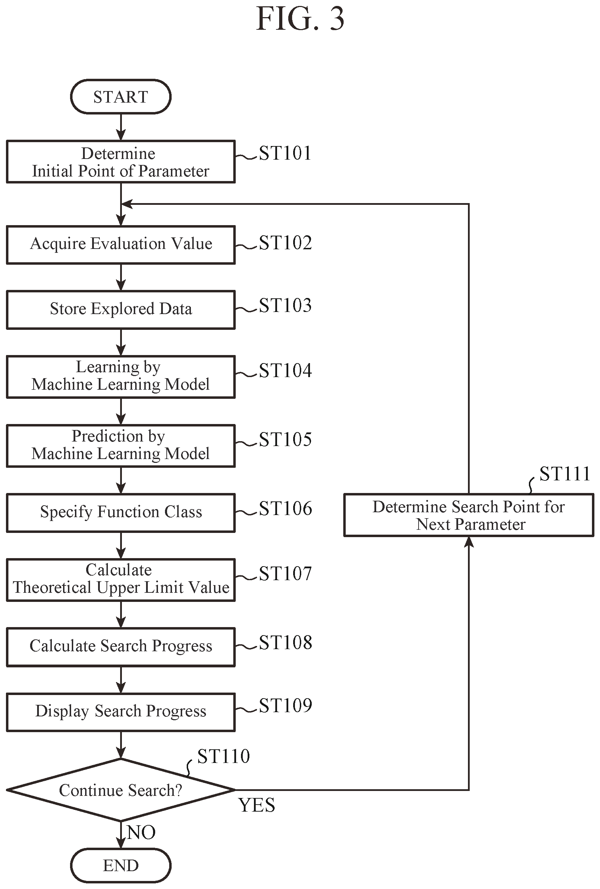

The functions of the parameter evaluating unit 11, the machine learning unit 12, the search progress acquiring unit 13, and the search parameter generating unit 15 are implemented by software, firmware, or a combination of software and firmware. The software and the firmware are described as programs and stored in the memory 104 or the storage medium 105. The processing circuitry 102 reads and executes a program stored in the memory 104 or the storage medium 105, thereby implementing the functions of the respective units. That is, the parameter optimizing device 1 includes the memory 104 or the storage medium 105 for storing a program that results in execution of each step illustrated in FIG. 3 to be described later, for example, when executed by the processing circuitry 102. Further, it can also be said that these programs cause a computer to execute the procedures and methods performed by the parameter evaluating unit 11, the machine learning unit 12, the search progress acquiring unit 13, and the search parameter generating unit 15. Here, the memory 104 corresponds to, for example, a random access memory (RAM), a read only memory (ROM), or the like. Examples of the storage medium 105 include a hard disk drive (HDD) and a solid state drive (SSD).

Note that, as described above, the memory 104 or the storage medium 105 that stores programs for implementing the functions of the parameter evaluating unit 11, the machine learning unit 12, the search progress acquiring unit 13, and the search parameter generating unit 15 may be separately provided for the respective units. For example, there may be two servers at remote locations, one server may include a memory or a storage medium that stores a program for implementing the functions of the machine learning unit 12 and the search progress acquiring unit 13, and the other server may include a memory or a storage medium that stores a program for implementing the functions of the parameter evaluating unit 11 and the search parameter generating unit 15. The above is an example, and any aspect may be used. For example, a server may be provided for each memory or storage medium storing a program for implementing respective functions.

Next, an operation example of the parameter optimizing device 1 according to the first embodiment illustrated in FIG. 1 will be described with reference to FIG. 3.

In the operation example of the parameter optimizing device 1 according to the first embodiment illustrated in FIG. 1, for example, as illustrated in FIG. 3, the parameter optimizing device 1 first determines an initial point as a search point of a parameter (step ST101). Here, the initial point may be random, or when a point having a good evaluation value is known in advance, the point may be used as the initial point.

Next, the parameter evaluating unit 11 acquires an evaluation value for the search point of the parameter on the basis of the determined search point of the parameter (step ST102).

That is, first, the operation unit 111 causes an optimization target to operate at the search point of the parameter on the basis of the determined search point of the parameter. Next, the evaluation value calculating unit 112 calculates an evaluation value for the search point of the parameter used in the operation unit 111 on the basis of an operation result of the optimization target by the operation unit 111.

Note that the operation result of the optimization target obtained by the operation unit 111 includes, for example, parameters set for the mechanical device, a configuration of the mechanical device, machine-specific values such as an operation mode, or information such as log data from performed operations. Further, these pieces of information are acquired from a mechanical device via an encoder or the like, for example.

As these pieces of information, for example, a value measured by a sensor disposed in a mechanical device may be directly used, or a value calculated on the basis of a value measured by the sensor may be used. Examples of the sensor include a temperature sensor, a pressure sensor, an acceleration sensor, a gyro sensor, and a humidity sensor.

Then, the evaluation value calculating unit 112 calculates the evaluation value on the basis of the information obtained by the operation unit 111 as described above.

As the evaluation value calculated by the evaluation value calculating unit 112, at least one value to be maximized or minimized is used. Here, a maximization problem is a target, but in the case of a minimization problem, it is only necessary to invert the sign of the evaluation value.

Further, when there is a plurality of evaluation values, each of the evaluation values may be calculated as an evaluation value, or the evaluation values may be combined into one evaluation value by a weighted sum or the like.

In addition, as the evaluation value, an index indicating how close it is to a certain target value may be used. For example, in a case where there is a target value for the motion speed when the mechanical device operates, the evaluation value is calculated with the evaluation value = -(actually measured motion speed - target motion speed)$^2$, and it is only necessary to search for the value of the parameter that maximizes the evaluation value.

Next, the explored data storage unit 113 stores the evaluation value calculated by the evaluation value calculating unit 112 and information indicating the search point of the corresponding parameter as explored data (step ST103).

Next, the machine learning unit 12 learns the relationship between the evaluation value and the parameter by using the machine learning model on the basis of the evaluation value acquired by the parameter evaluating unit 11 and the search point of the corresponding parameter (step ST104).

Note that the machine learning unit 12 uses one or more methods such as linear regression, a generalized linear model, Gaussian process regression, a hierarchical Bayesian model, a neural network, a neural process, random forest, or a gradient boosting tree, for example, as the machine learning model.

In a case where the number of dimensions input to the machine learning model, such as the number of parameters, increases, principal component analysis, singular value decomposition, tensor decomposition, Auto Encoder, or the like, which is a dimension reduction method, may also be used as the machine learning model in the machine learning unit 12, and the dimensionally reduced value may be input to the machine learning model.

Here, when the explored data is $D_t$, the parameter obtained by the number of times of search (t) is $x_t$, a state quantity indicating the state of the mechanical device instead of the parameter is $s_t$, and the evaluation value is $y_t$, the explored data ($D_t$) is expressed by the following Formula (1). Then, the machine learning unit 12 performs learning with the machine learning model using the explored data ($D_t$).

Note that, as the explored data ($D_t$), the parameter ($x_t$) and the evaluation value ($y_t$) are essential, but the state quantity ($s_t$) is not limited thereto.

$$D_t = \{\{x_1, s_1, y_1\}, .., \{x_t, s_t, y_t\}\} \qquad (1)$$

For example, in a case where the Gaussian process regression is used as the machine learning model, the evaluation value (y) that is a prediction result for a certain parameter (x) can be expressed by the following Formula (2) from the explored data ($D_t$) and a hyperparameter ($\theta$) of the machine learning model, and the machine learning model can be constructed.

$$p(y|x, \theta, D_t) \qquad (2)$$

Further, for example, in a case where a neural network or a neural process is used as the machine learning model, when the parameter is set to $X = \{x, ..., x_n\}$, the evaluation value is set to $Y = \{y, ..., y_n\}$, the machine learning model is set to $f(\cdot)$, and the parameter of the machine learning model is set to $\theta$ among n data acquired in a mini-batch from the explored data ($D_t$), a loss function (L) is calculated by the following Formula (3). Then, the machine learning unit 12 performs learning by updating the parameter ($\theta$) of the machine learning model by an optimization method such as a stochastic gradient descent (SGD).

$$L = \left(Y - f(X, \theta)\right)^2 \qquad (3)$$

Next, the machine learning unit 12 predicts an evaluation value for a search candidate point of the parameter by the machine learning model (step ST105).

Here, regarding a search candidate point (x(hat)) for the parameter, the machine learning unit 12 may generate it randomly, for example, or in a case where a maximum value or a minimum value of the parameter is known, the machine learning unit 12 may generate the parameter search candidate point at a grid point on the basis of the maximum value or the minimum value, or may generate the parameter search candidate point using an experimental design method.

Next, the function class specifying unit 131 specifies the function class of the evaluation value on the basis of the evaluation value acquired by the parameter evaluating unit 11 and the search point of the corresponding parameter and the evaluation value predicted by the machine learning unit 12 and the search candidate point of the corresponding parameter (step ST106). At this time, the function class specifying unit 131 specifies the function class of the evaluation value from a set of function classes of which global optimality is guaranteed.

Note that examples of the function class of which global optimality is guaranteed specified by the function class specifying unit 131 include, but are not limited to, Lipschitz continuous function or convex function.

The function class specifying unit 131 uses a prediction result by the machine learning unit 12 and the explored data ($D_t$) to determine whether or not the function class is applicable from a function class with a loose condition, thereby specifying the function class.

For example, consider a case where there are two candidates of function classes: a convex function and a Lipschitz continuous function. In this case, the Lipschitz continuous function is a looser condition than the convex function. Thus, first, the function class specifying unit 131 assumes that an objective function is the Lipschitz continuous function. Next, the function class specifying unit 131 checks whether or not the prediction result by the machine learning unit 12 and the explored data ($D_t$) satisfy the condition of the convex function as in the following Formula (4). Note that $\nabla f(x_i)$, which is a gradient of the objective function, in Formula (4) is estimated from the prediction result by the machine learning unit 12. Then, when it is determined that the condition of the convex condition is satisfied, the function class specifying unit 131 specifies the function class assuming that the objective function is the convex function, and when it is determined that the condition of the convex condition is not satisfied, the function class specifying unit specifies the function class assuming that the objective function is the Lipschitz continuous function.

$$y_i \geq y_j + \nabla f(x_j)^T (x_i - x_j), \forall (x_i, y_i), (x_j, y_j) \in D_t \quad (4)$$

Next, the search progress calculating unit 132 calculates a theoretical upper limit value on the basis of the function class specified by the function class specifying unit 131 (step ST107).

For example, when the parameter and the function of the evaluation value is specified to be the Lipschitz continuous function, $U_f(x)$ that is the theoretical upper limit value can be calculated by the following Formula (5). Note that, in the Formula (5), 1 is a Lipschitz constant. For example, in a case where the Lipschitz constant is calculated from the machine learning model, a value having a maximum differential value calculated by a forward difference from y(x(hat)) and y(x(hat) + Δx) that are inference results for x(hat) and x(hat) + Δx slightly changed from x(hat) by Δx may be used, or the Lipschitz constant may be calculated from the explored data ($D_t$).

$$U_f(x) = \min_{i=1,\dots,t} (y_i + l\|x - x_i\|_2) \qquad (\;5\;)$$

Next, the search progress calculating unit 132 calculates the progress of the search on the basis of the evaluation value acquired by the parameter evaluating unit 11 and the corresponding parameter, the evaluation value predicted by the machine learning unit 12 and the search candidate point of the corresponding parameter, and the calculated theoretical upper limit value (step ST108).

Hereinafter, a case where the search progress calculating unit 132 calculates an in-search optimal value, a search progress rate, a progress rate based on an evaluation value, a remaining time, the remaining number of times of the search, and a global optimal value (expectation) as the progress of the search will be described. Note that, as described above, the in-search optimal value, the information regarding the search end, the remaining number of times of the search, and the global optimal value (expectation) may be handled as information different from the progress, or may be included in the progress.

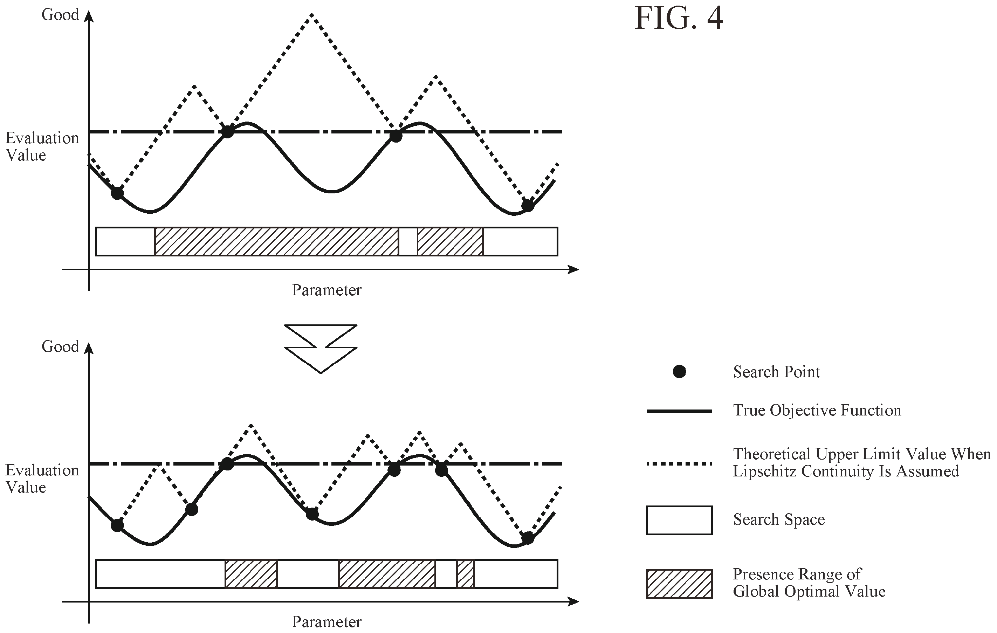

First, as illustrated in FIG. 4, for example, the search progress calculating unit 132 sets the best evaluation value among evaluation values for search points of parameters that have been searched for as an in-search optimal value ($y_{\text{best}}$). Note that, in FIG. 4, a black circle indicates a search point of a parameter, and a one-dot chain line indicates the in-search optimal value ($y_{\text{best}}$).

In addition, as illustrated in FIG. 4, for example, the search progress calculating unit 132 compares the theoretical upper limit value with the in-search optimal value ($y_{\text{best}}$) in a search space, and sets a region where the theoretical upper limit value is larger as a presence range of the global optimal value. Note that the search space is a space including upper and lower limit values or values that can be taken of each parameter specified by the user in optimizing the parameter. Further, in FIG. 4, a dotted line indicates the theoretical upper limit value in a case where the function class specified by the function class specifying unit 131 is the Lipschitz continuous function, and a shaded portion in the search space indicates the presence range of the global optimal value.

Specifically, when the search space is X, the presence range of the global optimal value is calculated by the following Formula (6). Note that, when it is difficult to calculate the region on the calculation resource, the number (n) of search points whose theoretical upper limit value exceeds may be used instead of the region.

$$\{x | U_f(x) > y_{\text{best}}, x \in \mathcal{X}\} \qquad (\;6\;)$$

Further, the search progress rate (PR [%]) can be calculated for N search candidate points from the following Formulas (7) and (8).

$$n = \left| \{U_f(x_n) | U_f(x_n) > y_{\text{best}}, n = 1, \dots, N\} \right| \qquad (\;7\;)$$

$$PR = 100/N * n \qquad (\;8\;)$$

In addition, the remaining time ($T_r$) and the remaining number of times of the search ($t_r$) may be calculated from the following Formulas (9) and (10) in a case where the number of times of the search so far is t, the required search time is T, and the number of search points whose theoretical upper limit value exceeds is n, and for example, as illustrated in FIG. 4, a change in the theoretical upper limit value in a case where the search is continued may be simulated, the number of times of the search until the search progress rate (PR [%]) reaches 100% may be set as the remaining number of times of the search ($t_r$), and the remaining time ($T_r$) may be calculated.

$$t_r = n \qquad (\;9\;)$$

$$T_r = t_r * T/t \qquad (\;1\;0\;)$$

Further, since the global optimal value (expectation) ($f^*$) is the maximum value of the theoretical upper limit value, it can be calculated from the following Formula (11).

$$f^* = \max\left(U_f(x_n)\right), n = 1, \dots, N \qquad (\;1\;1\;)$$

Next, the display unit 14 displays progress information indicating the progress of the search on the basis of the progress information indicating the progress of the search acquired by the search progress acquiring unit 13 (step ST109). Here, the progress information displayed by the display unit 14 may be output under the control of the output control unit included in the search progress acquiring unit 13 described above.

Note that what is illustrated in FIG. 4 may be displayed on the display unit 14. That is, at least one of the search point, a true objective function, the theoretical upper limit value, the search space, or the presence range of the global optimal value included in FIG. 4 may be displayed on the display unit 14. By displaying this, the user can check the current search status. Further, by indicating the presence range of the theoretical upper limit value or the global optimal value, the user can visually recognize the evaluation value or the presence of the optimal value.

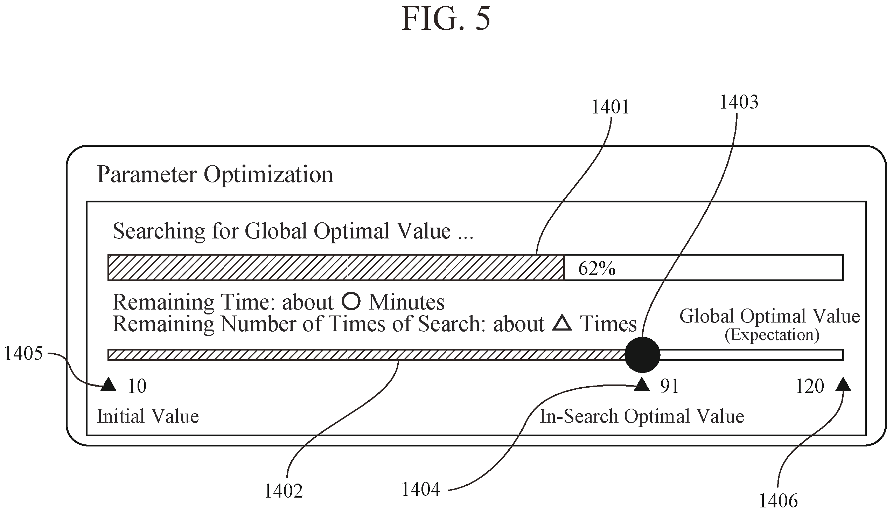

For example, in FIG. 5, the display unit 14 displays the progress of the search including the in-search optimal value, the search progress rate, the remaining time, a remaining search time, and the global optimal value (expectation) calculated as the progress of the search, the evaluation value for the initial point of the parameter, and the information indicating the ratio of the in-search optimal value to the global optimal value described above. Note that, as described above, the progress need not include all pieces of the information.

The in-search optimal value is the highest evaluated value found in the current search. Note that the in-search optimal value may be evaluated higher than usual for the search point due to noise or the like. Thus, the in-search optimal value may be an average value of a plurality of evaluation values among the high evaluation values currently found, or may be calculated by other calculation methods, and only needs to be a value close to the maximum value or indicating the maximum value among the found evaluation values.

The search progress rate is illustrated using a bar graph 1401 in FIG. 5. When the shaded portion of the bar graph 1401 illustrated in FIG. 5 reaches the right end, the search progress rate is 100%. Note that, although the bar graph 1401 is used to indicate the search progress rate in FIG. 5, only the ratio of the progress rate may be displayed (62% in FIG. 5), or both the bar graph 1401 and the ratio may be displayed.

In FIG. 5, the upper bar graph 1401 indicates the search progress rate at the search point, and a lower bar graph 1402 is used to indicate the progress based on the evaluation value of the search point. In the bar graph 1402 of FIG. 5, a position 1404 of a black dot 1403 indicates the current in-search optimal value, and a left end 1405 of the bar graph 1402 indicates the evaluation value evaluated at the search point in the initial search. Also, a right end 1406 of the bar graph 1402 indicates the expected global optimal value that is calculated. This global optimal value may indicate a specific value, and 120 is illustrated as an expected global optimal value in FIG. 5 as an example. With the bar graph 1402, it is possible to, by comparing and overviewing, check the degree of the evaluation value that has been currently found (in-search optimal value) among the maximum values that are expected. Further, the bar graph 1402 in FIG. 5 makes it possible to check the ratio of the in-search optimal value to the global optimal value. Although not illustrated in FIG. 5, the ratio of the in-search optimal value may be specifically indicated, and when the global optimal value is 120 and the in-search optimal value is 60, a value such as 50% or 50 may be displayed on the display unit 14. Note that, since the evaluation value may be calculated as a negative value, a value obtained by dividing a value obtained by subtracting an initial value from the global optimal value by a value obtained by subtracting the initial value from the in-search optimal value may be set as a ratio. In the example of FIG. 5, a ratio is 0.736 which is a value obtained by dividing 91-10 (a value obtained by subtracting the initial value from the in-search optimal value) by 120-10 (an initial value from the global optimal value). In this manner, as illustrated in FIG. 5, the progress rate based on the evaluation value of the search point may be indicated.

In addition, as illustrated in FIG. 5, both the search progress rate (bar graph, percentage, or the like) and the progress rate (bar graph, percentage, or the like) with respect to the evaluation value of the search point may be displayed on the display unit 14. Both the search progress rate and the progress rate with respect to the evaluation value of the search point indicate progress, but since a reference of the progress is different, they may take different values as illustrated in FIG. 5. These values can be used as references for determination of the end of the search described below. As an example, the search progress rate illustrated in FIG. 5 is 62%, and the progress rate with respect to the evaluation value of the search point is about 74% from the calculation, which is different from each other. According to the bar graph indicating these values or the ratio, only about half of the searchable search points has been found, but a relatively large value of about 74% of the theoretically expected value has been found for the optimal value. In view of this situation, for example, assuming that the user has finished searching for search points that can be searched for only about half but has been able to search for a search point having a sufficient evaluation value, the user himself/herself or the parameter optimizing device 1 may end the search as described in an embodiment and the like described later. By presenting both pieces of information in this manner, it is possible to determine an appropriate search end timing.

Next, the search end determining unit 151 determines whether not to end the search, that is, whether to continue the search, on the basis of the progress of the search acquired by the search progress acquiring unit 13 (step ST110).

At this time, for example, the search end determining unit 151 may determine to end the search when the in-search optimal value reaches a desired value.

In addition, for example, the search end determining unit 151 may determine to end the search when the search progress rate reaches 100%.

Further, for example, the search end determining unit 151 may determine to end the search when determining that the in-search optimal value has reached the global optimal value (expectation).

When the search end determining unit 151 determines to continue the search in step ST110, the search parameter calculating unit 152 determines a search point for the next parameter, and the operation command generating unit 153 generates a command value for the operation unit 111 on the basis of the parameter determined by the search parameter calculating unit 152 (step ST111). Thereafter, the sequence returns to step ST102. Then, the parameter evaluating unit 11 repeats the above operation on the basis of the parameter included in the command value from the search parameter generating unit 15.

Note that, for example, in a case where Bayesian optimization is used as a method of determining a search point for the next parameter, the next search point can be determined by calculating a numerical value called an acquisition function. Representative examples of this calculation method include Upper Confidence Bound (UCB) and Expected Improvement (EI).

Using an average ($\mu$(x(hat))) and a standard deviation ($\sigma$(x(hat))) of prediction results of the Gaussian process regression for a candidate point (x(hat)) of the parameter to be searched for, UCB is expressed by the following Formula (12). Here, $\kappa$ is a hyperparameter, and the tendency to search for a parameter that has not been searched for increases as $\kappa$ increases.

$$acq_{UCB}(\hat{x}) = \mu(\hat{x}) + \kappa\sigma(\hat{x}) \qquad (1\ 2)$$

Further, when an in-search optimal value obtained at a certain point of time is $y_{best}$, EI is defined by the following Formulas (13) and (14). Here, $\Phi(Z)$ and $\varphi(Z)$ are a cumulative distribution function and a probability density function of a standard normal distribution.

$$acq_{EI}(\hat{x}) = E[\max(f(\hat{x}) - y_{best}, 0)] = (\mu(\hat{x}) - y_{best})\Phi(Z) + \sigma(\hat{x})\phi(Z) \qquad (1\ 3)$$

$$Z = (\mu(\hat{x}) - y_{best})/\sigma(\hat{x}) \qquad (1\ 4)$$

Then, the search parameter calculating unit 152 can set a point where values of these acquisition functions are the largest as a search point of the next parameter.

On the other hand, in step ST110, when the search end determining unit 151 determines not to continue the search, that is, determines to end the search, the sequence ends.

As described above, according to the first embodiment, the information processing device includes: the machine learning unit 12 to learn a relationship between an evaluation value and a parameter on the basis of a search point of the parameter and an evaluation value of the search point, and predict the evaluation value for a search candidate point of the parameter; and the search progress acquiring unit 13 to acquire progress information indicating progress of a search on the basis of the search point, the evaluation value of the search point, the search candidate point, and the evaluation value of the search candidate point predicted by the machine learning unit 12.

Further, according to the first embodiment, the information processing device includes the parameter evaluating unit 11 to acquire the evaluation value of the search point on the basis of the search point that has been determined.

Furthermore, according to the first embodiment, the information processing device includes the parameter evaluating unit 11 including the operation unit 111 to cause a target to operate at the determined next search point, and the evaluation value calculating unit 112 to calculate an evaluation value of the next search point on the basis of an operation result by the operation unit 111.

Thus, in the information processing device according to the first embodiment, it is possible to acquire information for reference of whether to continue or end the search for the parameter.

Further, according to the first embodiment, the information processing device includes the search parameter generating unit 15 to determine a next search point, which is a search point for a parameter to be searched for next, on the basis of the progress information acquired by the search progress acquiring unit 13. Thus, the information processing device according to the first embodiment can end the search at a more appropriate timing as compared with the related art. As a result, in the information processing device according to the first embodiment, the search time for the parameter can be reduced as compared with the related art.

Further, according to the first embodiment, the information processing device includes an output control unit to perform control to output the acquired progress information to the display unit 14.

Furthermore, according to the first embodiment, the information processing device includes the display unit 14.

Thus, in the information processing device according to the first embodiment, the user can grasp information for reference of whether to continue or end the search for the parameter.

Further, according to the first embodiment, the search progress acquiring unit 13 included in the information processing device includes: the function class specifying unit 131 to specify a function class of an evaluation value from a set of function classes on the basis of the search point, the evaluation value of the search point, the search candidate point, and the evaluation value of the search candidate point predicted by the machine learning unit 12; and the search progress calculating unit 132 to calculate the progress of the search on the basis of the search point, the evaluation value of the search point, the search candidate point, the evaluation value of the search candidate point predicted by the machine learning unit 12, and the function class.

Furthermore, according to the first embodiment, the function class is a function of which global optimality is guaranteed.

Thus, in the information processing device according to the first embodiment, convergence to a local optimal value can be avoided, and a global optimal value can be obtained.

Further, according to the first embodiment, the information processing method includes: a step of learning a relationship between an evaluation value and a parameter on the basis of a search point of the parameter and an evaluation value of the search point, and predicting, by the machine learning unit 12, the evaluation value for a search candidate point of the parameter; and a step of acquiring, by the search progress acquiring unit 13, progress information indicating progress of a search on the basis of the search point, the evaluation value of the search point, the search candidate point, and the evaluation value of the search candidate point predicted by the machine learning unit 12. Thus, in the information processing method according to the first embodiment, it is possible to acquire information for reference of whether to continue or end the search for the parameter.

Further, according to the first embodiment, the program causes a computer to execute: processing of learning a relationship between an evaluation value and a parameter on the basis of a search point of the parameter and an evaluation value of the search point, and predicting the evaluation value for a search candidate point of the parameter; and processing of acquiring progress information indicating progress of a search on the basis of the search point, the evaluation value of the search point, the search candidate point, and the evaluation value of the predicted search candidate point. Thus, in the program according to the first embodiment, it is possible to acquire information for reference of whether to continue or end the search for the parameter.

Further, according to the first embodiment, the display device includes: an acquiring unit to acquire progress information indicating progress of a search for an optimal parameter by the parameter optimizing device 1 that evaluates a parameter of an optimization target and searches for the optimal parameter; and the display unit 14 to display the progress information.

Furthermore, according to the first embodiment, on the basis of a search point of the parameter that has been determined, an evaluation value for the search point is acquired by the parameter optimizing device 1, a relationship between the evaluation value and the parameter is learned by the parameter optimizing device 1 on the basis of the search point and the evaluation value of the search point, the evaluation value for a search candidate point of the parameter is predicted by the parameter optimizing device 1 on the basis of the learned relationship, and the acquiring unit included in the display device acquires the progress information calculated by the parameter optimizing device 1 on the basis of the search point, the evaluation value of the search point, the search candidate point, and the predicted evaluation value of the search candidate point.

Thus, in the display device according to the first embodiment, the user can grasp information for reference of whether to continue or end the search for the parameter.

Further, according to the first embodiment, the progress information includes information indicating the progress of the search for the search point of the parameter, and the display unit 14 displays information indicating the progress of the search for the search point.

Further, according to the first embodiment, the progress information includes information indicating the progress based on an in-search optimal value among evaluation values, each of which is the evaluation value found by the parameter optimizing device 1, and the evaluation value expected to be maximum in the entire search by the parameter optimizing device 1, and the display unit 14 displays the information indicating the progress based on an in-search optimal value among evaluation values, each of which is the evaluation value found by the parameter optimizing device 1, and the evaluation value expected to be maximum in the entire search by the parameter optimizing device 1.

Further, according to the first embodiment, the progress information includes information indicating a ratio at which the search for the parameter is ended in the entire search for the parameter, and the display unit 14 displays information indicating the ratio at which the search for the parameter is ended.

Further, according to the first embodiment, the progress information includes information regarding a search end of the parameter search, and the display unit 14 displays information regarding the search end.

Further, according to the first embodiment, the information regarding the search end includes a remaining time until the parameter search is ended or an end time of the parameter search on the basis of the progress information.

Further, according to the first embodiment, the progress information includes information regarding a remaining number of times of search of the parameter search, and the display unit 14 displays information regarding the remaining number of times of the search.

Further, according to the first embodiment, the progress information includes an in-search optimal value among evaluation values, each of which is the evaluation value found by the parameter optimizing device 1, and the display unit 14 displays the in-search optimal value.

Further, according to the first embodiment, the progress information includes information indicating the evaluation value expected to be maximum by the parameter optimizing device 1 in the entire search by the parameter optimizing device 1, and the display unit 14 displays information indicating the evaluation value expected to be maximum.

Further, according to the first embodiment, the progress information includes information indicating a ratio of the in-search optimal value to the evaluation value expected to be maximum, and the display unit 14 displays the information indicating a ratio of the in-search optimal value to the evaluation value expected to be maximum on the basis of the progress information.

Thus, in the display device according to the first embodiment, the user can grasp information for reference of whether to continue or end the search for the parameter.

Further, according to the first embodiment, the display method includes: a step of acquiring, by an acquiring unit, progress information indicating progress of a search for an optimal parameter by the parameter optimizing device 1 that evaluates a parameter of an optimization target and searches for the optimal parameter; and a step of displaying the progress information by the display unit 14. Thus, in the display method according to the first embodiment, the user can grasp information for reference of whether to continue or end the search for the parameter.

Further, according to the first embodiment, the program causes a computer to execute: processing of acquiring progress information indicating progress of a search for an optimal parameter by the parameter optimizing device 1 that evaluates a parameter of an optimization target and searches for the optimal parameter; and processing of displaying the progress information. Thus, in the display method according to the first embodiment, the user can grasp information for reference of whether to continue or end the search for the parameter.

Second Embodiment

In the parameter optimizing device 1 according to the first embodiment, the case where the search end determining unit 151 automatically determines whether or not to end the search has been described. On the other hand, regarding a parameter optimizing device 1 according to a second embodiment, a case where the user manually determines whether or not to end the search after seeing the progress of the search will be described.

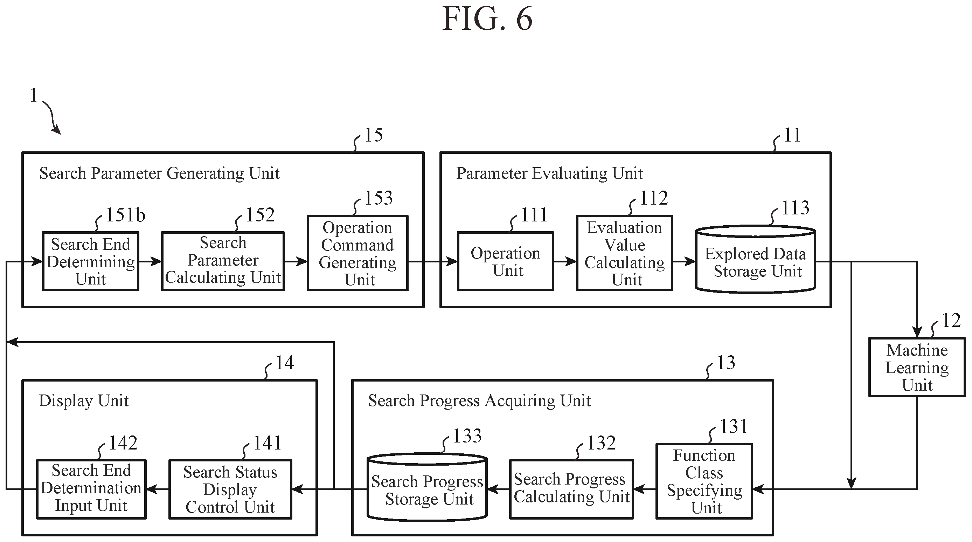

FIG. 6 is a diagram illustrating a configuration example of the parameter optimizing device 1 according to the second embodiment. In the parameter optimizing device 1 according to the second embodiment illustrated in FIG. 6, with respect to the parameter optimizing device 1 according to the first embodiment illustrated in FIG. 1, a configuration of the display unit 14 is changed, and the search end determining unit 151 is changed to a search end determining unit 151b. Other configurations of the parameter optimizing device 1 according to the second embodiment illustrated in FIG. 6 are similar to those of the parameter optimizing device 1 according to the first embodiment illustrated in FIG. 1, and the same reference numerals are given thereto and only different portions are described.

Note that, in a case where the user manually determines whether or not to end the search as in the second embodiment, the progress of the search includes, for example, one or more of a search progress rate, an in-search optimal value, a remaining time, the remaining number of times of the search, or a global optimal value (expectation).

As illustrated in FIG. 6, the display unit 14 according to the second embodiment includes a search status display control unit 141 and a search end determination input unit 142.

The search status display control unit 141 performs control to display information indicating the progress of the search on the basis of the progress of the search acquired by the search progress acquiring unit 13. The function of the search status display control unit 141 is similar to the function of the display unit 14 in the first embodiment.

The search end determination input unit 142 receives an input indicating whether or not to end the search by the user.

Information indicating the input received by the search end determination input unit 142 is output to the search parameter generating unit 15 (search end determining unit 151b).

Note that FIG. 6 illustrates a case where the display unit 14 is provided inside the parameter optimizing device 1. However, it is not limited thereto, and the fact that the display unit 14 may be provided outside the parameter optimizing device 1 is the same as the case of the first embodiment.

The search end determining unit 151b determines whether or not to end the search on the basis of the input received by the display unit 14.

Note that, when the search end determining unit 151b determines not to end the search, that is, to continue the search, the search parameter calculating unit 152 according to the second embodiment determines a search point of a next parameter.

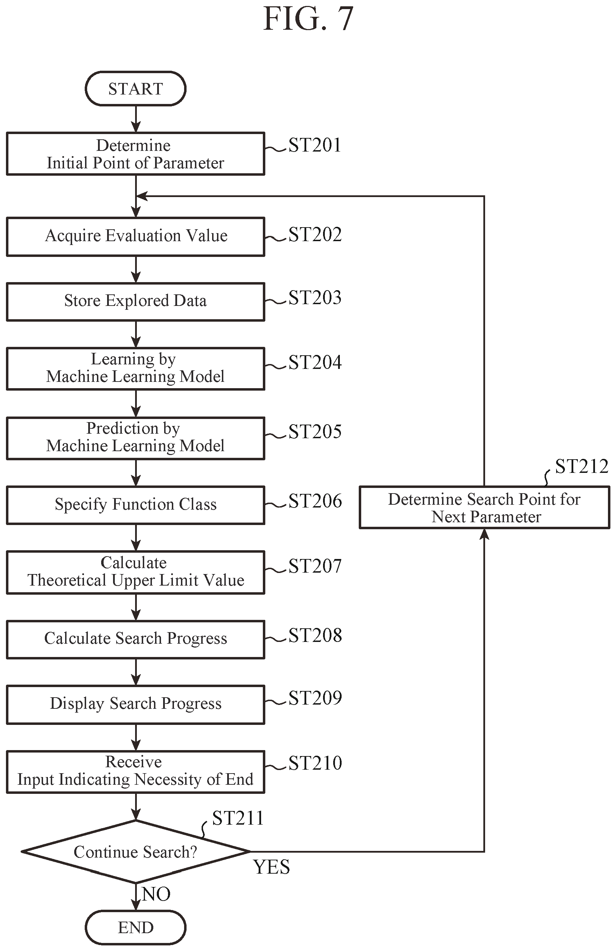

Next, an operation example of the parameter optimizing device 1 according to the second embodiment illustrated in FIG. 6 will be described with reference to FIG. 7.

In the operation example of the parameter optimizing device 1 according to the second embodiment illustrated in FIG. 6, for example, as illustrated in FIG. 7, the parameter optimizing device 1 first determines an initial point as a search point of a parameter (step ST201).

Next, the parameter evaluating unit 11 acquires an evaluation value for the search point of the parameter on the basis of the determined search point of the parameter (step ST202).

That is, first, the operation unit 111 causes an optimization target to operate at the search point of the parameter on the basis of the determined search point of the parameter. Next, the evaluation value calculating unit 112 calculates an evaluation value for the search point of the parameter used in the operation unit 111 on the basis of an operation result of the optimization target by the operation unit 111.

Next, the explored data storage unit 113 stores the evaluation value calculated by the evaluation value calculating unit 112 and information indicating the search point of the corresponding parameter as explored data (step ST203).

Next, the machine learning unit 12 learns the relationship between the evaluation value and the parameter by using the machine learning model on the basis of the evaluation value acquired by the parameter evaluating unit 11 and the search point of the corresponding parameter (step ST204).

Next, the machine learning unit 12 predicts an evaluation value for a search candidate point of the parameter by the machine learning model (step ST205).

Next, the function class specifying unit 131 specifies the function class of the evaluation value on the basis of the evaluation value acquired by the parameter evaluating unit 11 and the search point of the corresponding parameter and the evaluation value predicted by the machine learning unit 12 and the search candidate point of the corresponding parameter (step ST206). At this time, the function class specifying unit 131 specifies the function class of the evaluation value from a set of function classes of which global optimality is guaranteed.

Next, the search progress calculating unit 132 calculates a theoretical upper limit value on the basis of the function class specified by the function class specifying unit 131 (step ST207).

Next, the search progress calculating unit 132 calculates the progress of the search on the basis of the evaluation value acquired by the parameter evaluating unit 11 and the corresponding parameter, the evaluation value predicted by the machine learning unit 12 and the search candidate point of the corresponding parameter, and the calculated theoretical upper limit value (step ST208).

Next, the search status display control unit 141 displays progress information indicating the progress of the search on the basis of the progress information indicating the progress of the search acquired by the search progress acquiring unit 13 (step ST209).

Next, the search end determination input unit 142 receives an input indicating whether or not to end the search by the user (step ST210).

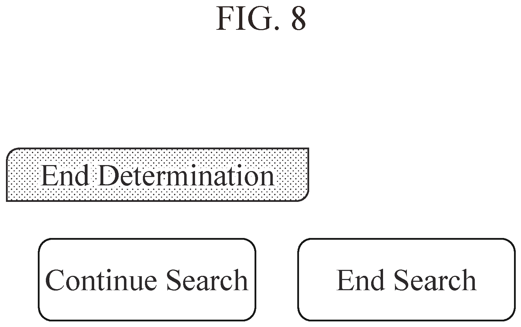

In the display unit 14 according to the second embodiment, for example, as illustrated in FIG. 8, in addition to display of the progress information indicating the progress of the search as illustrated in FIG. 5 in the first embodiment, display for determining continuation or end of the search is performed. In the case of FIG. 8, the user selects either the "continue search" button or the "end search" button, and the search end determination input unit 142 receives the selection.

Next, the search end determining unit 151b determines whether not to end the search, that is, whether to continue the search, on the basis of the input received by the display unit 14 (step ST211).

At this time, the search end determining unit 151b determines to continue the search when the user makes an input indicating the continuation of the search, and determines to end the search when the user makes an input indicating the end of the search.

For example, in the case of FIG. 8, the search end determining unit 151b determines to continue the search when the "continue search" button is selected by the user, and determines to end the search when the "end search" button is selected by the user.

When the search end determining unit 151b determines to continue the search in step ST211, the search parameter calculating unit 152 determines a search point for the next parameter, and the operation command generating unit 153 generates a command value for the operation unit 111 on the basis of the parameter determined by the search parameter calculating unit 152 (step ST212). Thereafter, the sequence returns to step ST202. Thereafter, the parameter evaluating unit 11 repeats the above operation on the basis of the parameter included in the command value from the search parameter generating unit 15.

On the other hand, in step ST211, when the search end determining unit 151b determines not to continue the search, that is, determines to end the search, the sequence ends.

As described above, according to the second embodiment, the information processing device includes the search parameter generating unit 15 to determine a next search point, which is a search point for a parameter to be searched for next, on the basis of whether or not an input indicating that the search for the parameter is to be ended based on the progress information acquired by the search progress acquiring unit 13 is made by a user, or on the basis of whether or not an input indicating that the search for the parameter is to be continued is made by a user.

Further, according to the second embodiment, the display unit 14 included in the information processing device displays information for receiving an input for ending a search.

Thus, the information processing device according to the second embodiment can end the search at an appropriate timing by the user as compared with the first embodiment. As a result, in the information processing device according to the second embodiment, the search time for the parameter can be reduced as compared with the related art.

Further, according to the second embodiment, the display unit 14 included in the display device displays information of receiving an input of end of the search or an input of continuation of the search by the parameter optimizing device 1. Thus, the display device according to the second embodiment can end the search at an appropriate timing by the user as compared with the first embodiment. As a result, in the display device according to the second embodiment, it is possible to reduce the search time for the parameter as compared with the related art.

Third Embodiment

In the parameter optimizing device 1 according to the first embodiment, the case where the search end determining unit 151 automatically determines whether or not to end the search has been described, and in the parameter optimizing device 1 according to the second embodiment, the case where the user manually determines whether or not to end the search has been described. On the other hand, in a parameter optimizing device 1 according to a third embodiment, a case where it is possible to switch whether to automatically or manually determine whether or not to end the search will be described.

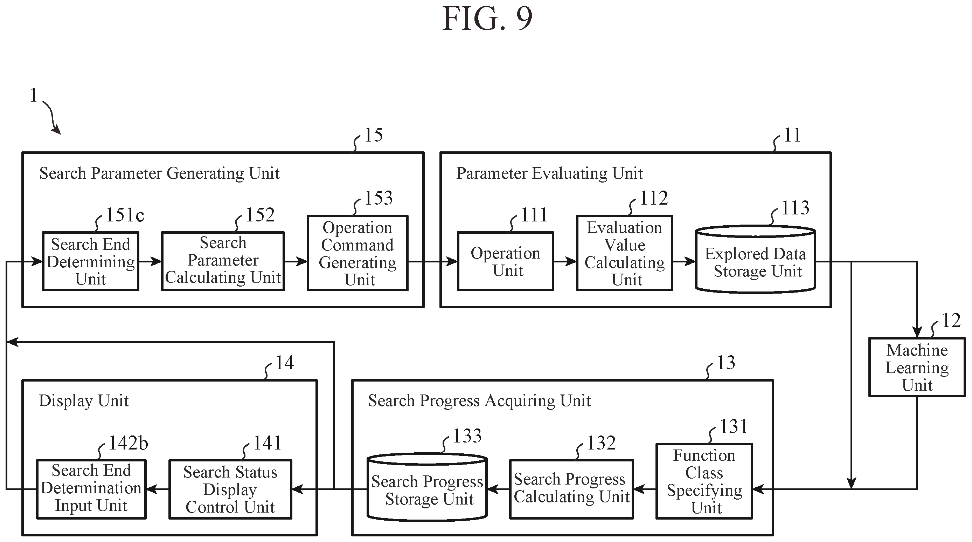

FIG. 9 is a diagram illustrating a configuration example of the parameter optimizing device 1 according to the third embodiment. In the parameter optimizing device 1 according to the third embodiment illustrated in FIG. 9, the search end determination input unit 142 is changed to a search end determination input unit 142b, and the search end determining unit 151b is changed to a search end determining unit 151c with respect to the parameter optimizing device 1 according to the second embodiment illustrated in FIG. 6. Other component examples of the parameter optimizing device 1 according to the third embodiment illustrated in FIG. 9 are similar to the component example of the parameter optimizing device 1 according to the second embodiment illustrated in FIG. 6, and the same reference numerals are given thereto and only different portions are described.

In a case where it is set to manually perform search end determination, the search end determination input unit 142b receives an input indicating whether or not to end a search by the user.

In addition, the search end determination input unit 142b may receive an input indicating a setting of whether to automatically perform or manually perform the search end determination by the user.

Information indicating the input received by the search end determination input unit 142 is output to the search parameter generating unit 15 (search end determining unit 151c).

Note that, when the input indicating the setting of whether to automatically perform or manually perform the search end determination is received by the search end determination input unit 142b, the parameter optimizing device 1 updates the setting of whether to automatically perform or manually perform the search end determination depending on the input.

The search end determining unit 151c determines whether or not to end the search on the basis of information indicating the setting of whether to automatically perform or manually perform the search end determination, and progress of the search acquired by the search progress acquiring unit 13 or the input indicating whether or not to end the search received by the search end determination input unit 142b.

At this time, first, the search end determining unit 151c checks whether to automatically perform or manually perform the search end determination on the basis of the information indicating the setting of whether to automatically perform or manually perform the search end determination.

Here, when checking that the setting is to automatically perform the search end determination, the search end determining unit 151c determines whether or not to end the search on the basis of the progress of the search acquired by the search progress acquiring unit 13. That is, in this case, the search end determining unit 151c performs the above determination by an operation similar to the operation of the search end determining unit 151 in the first embodiment.

On the other hand, when checking that the setting is to manually perform the search end determination, the search end determining unit 151c determines whether or not to end the search on the basis of the input indicating whether or not to end the search received by the display unit 14. That is, in this case, the search end determining unit 151c performs the above determination by an operation similar to the operation of the search end determining unit 151b in the second embodiment.

Note that, when the search end determining unit 151c determines not to end the search, that is, to continue the search, the search parameter calculating unit 152 according to the third embodiment determines a search point of a next parameter.

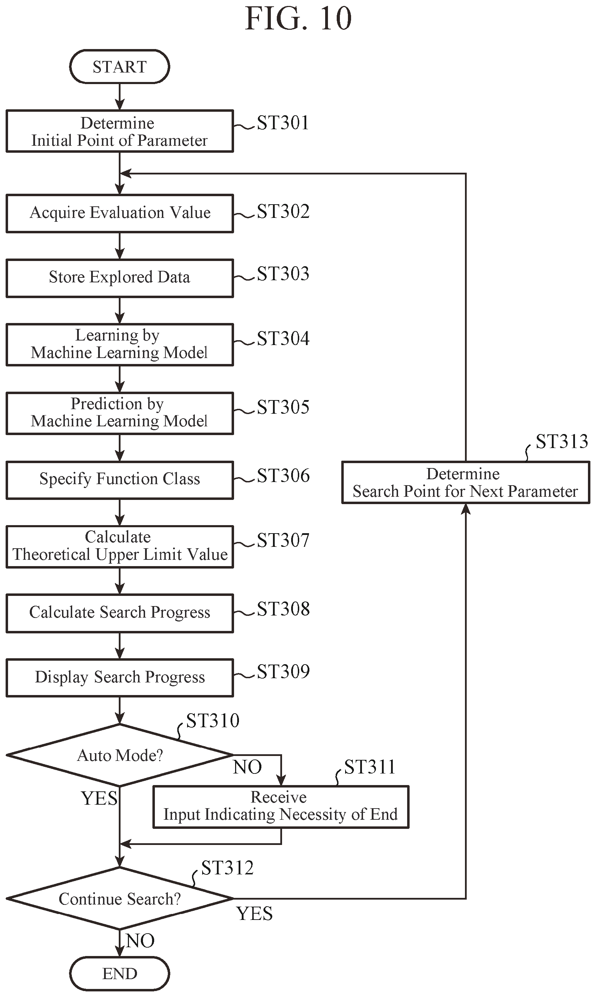

Next, an operation example of the parameter optimizing device 1 according to the third embodiment illustrated in FIG. 9 will be described with reference to FIG. 10.

In the operation example of the parameter optimizing device 1 according to the third embodiment illustrated in FIG. 9, for example, as illustrated in FIG. 10, the parameter optimizing device 1 first determines an initial point as a search point of a parameter (step ST301).

Next, the parameter evaluating unit 11 acquires an evaluation value for the search point of the parameter on the basis of the determined search point of the parameter (step ST302).

That is, first, the operation unit 111 causes an optimization target to operate at the search point of the parameter on the basis of the determined search point of the parameter. Next, the evaluation value calculating unit 112 calculates an evaluation value for the search point of the parameter used in the operation unit 111 on the basis of an operation result of the optimization target by the operation unit 111.

Next, the explored data storage unit 113 stores the evaluation value calculated by the evaluation value calculating unit 112 and information indicating the search point of the corresponding parameter as explored data (step ST303).

Next, the machine learning unit 12 learns the relationship between the evaluation value and the parameter by using the machine learning model on the basis of the evaluation value acquired by the parameter evaluating unit 11 and the search point of the corresponding parameter (step ST304).

Next, the machine learning unit 12 predicts an evaluation value for a search candidate point of the parameter by the machine learning model (step ST305).

Next, the function class specifying unit 131 specifies the function class of the evaluation value on the basis of the evaluation value acquired by the parameter evaluating unit 11 and the search point of the corresponding parameter and the evaluation value predicted by the machine learning unit 12 and the search candidate point of the corresponding parameter (step ST306). At this time, the function class specifying unit 131 specifies the function class of the evaluation value from a set of function classes of which global optimality is guaranteed.

Next, the search progress calculating unit 132 calculates a theoretical upper limit value on the basis of the function class specified by the function class specifying unit 131 (step ST307).

Next, the search progress calculating unit 132 calculates the progress of the search on the basis of the evaluation value acquired by the parameter evaluating unit 11 and the corresponding parameter, the evaluation value predicted by the machine learning unit 12 and the search candidate point of the corresponding parameter, and the calculated theoretical upper limit value (step ST308).

Next, the search status display control unit 141 displays progress information indicating the progress of the search on the basis of the progress information indicating the progress of the search acquired by the search progress acquiring unit 13 (step ST309).

Next, the search end determination input unit 142b checks whether the setting is to automatically perform the search end determination, that is, an auto mode on the basis of information indicating the setting of whether to automatically perform or manually perform the search end determination (step ST310).

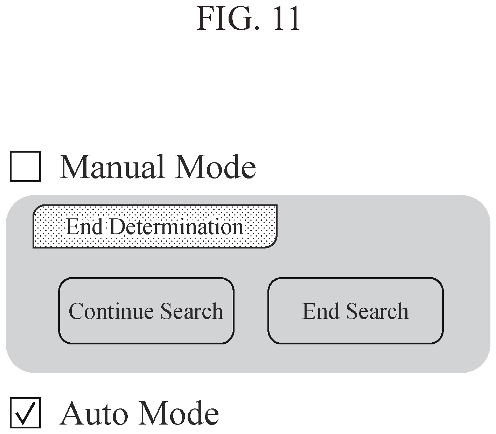

As illustrated in FIG. 11, for example, in the display unit 14 according to the third embodiment, in addition to the display of the progress information indicating the progress of the search as illustrated in FIG. 5 in the first embodiment, automatic determination or manual determination is determined, and display for determining continuation or end of the search is performed. In the case of FIG. 11, either a "manual mode" or the "auto mode" is selected by default. Then, the user can switch the mode by selecting either a check box attached to the "manual mode" or a check box attached to the "auto mode". Note that the mode can be switched at any timing during the search. Further, in the case of FIG. 11, in a state where the "manual mode" is selected, the user selects either the "continue search" button or the "end search" button.

In step ST310, when checking that the setting is not to automatically perform the search end determination, that is, the setting is to manually perform the search end determination, the search end determination input unit 142b receives an input indicating whether or not to end the search by the user (step ST311).

On the other hand, in step ST310, when the search end determination input unit 142b checks that the setting is to automatically perform the search end determination, the sequence proceeds to step ST312.

Next, the search end determining unit 151c determines whether or not to end the search on the basis of the information indicating the setting of whether to automatically perform or manually perform the search end determination, and the progress information indicating the progress of the search acquired by the search progress acquiring unit 13, or the input indicating whether or not to end the search received by the search end determination input unit 142b (step ST312).

Here, when checking that the setting is to automatically perform the search end determination, the search end determining unit 151c determines whether or not to end the search on the basis of the progress information indicating the progress of the search acquired by the search progress acquiring unit 13. That is, in this case, the search end determining unit 151c performs the above determination by an operation similar to the operation of the search end determining unit 151 in the first embodiment.

On the other hand, when checking that the setting is to manually perform the search end determination, the search end determining unit 151c determines whether or not to end the search on the basis of the input indicating whether or not to end the search received by the display unit 14. That is, in this case, the search end determining unit 151c performs the above determination by an operation similar to the operation of the search end determining unit 151b in the second embodiment.

When the search end determining unit 151c determines to continue the search in step ST312, the search parameter calculating unit 152 determines a search point for the next parameter, and the operation command generating unit 153 generates a command value for the operation unit 111 on the basis of the parameter determined by the search parameter calculating unit 152 (step ST313). Thereafter, the sequence returns to step ST302. Thereafter, the parameter evaluating unit 11 repeats the above operation on the basis of the parameter included in the command value from the search parameter generating unit 15.

On the other hand, in step ST312, when the search end determining unit 151c determines not to continue the search, that is, determines to end the search, the sequence ends.

As described above, according to the third embodiment, the display unit 14 included in the display device displays information for setting whether the end of the search by the parameter optimizing device 1 is determined by a user or by the parameter optimizing device 1. Thus, in the display device according to the third embodiment, the user can select whether to automatically perform or manually perform the search end determination, and it is possible to provide a search end determination method that suits the user's preference, as compared with the first and second embodiments.

Fourth Embodiment

A case where a parameter optimizing device 1 according to a fourth embodiment also acquires an improvement probability indicating how much the next search point improves the evaluation value in addition to the progress of the search described in the third embodiment will be described.

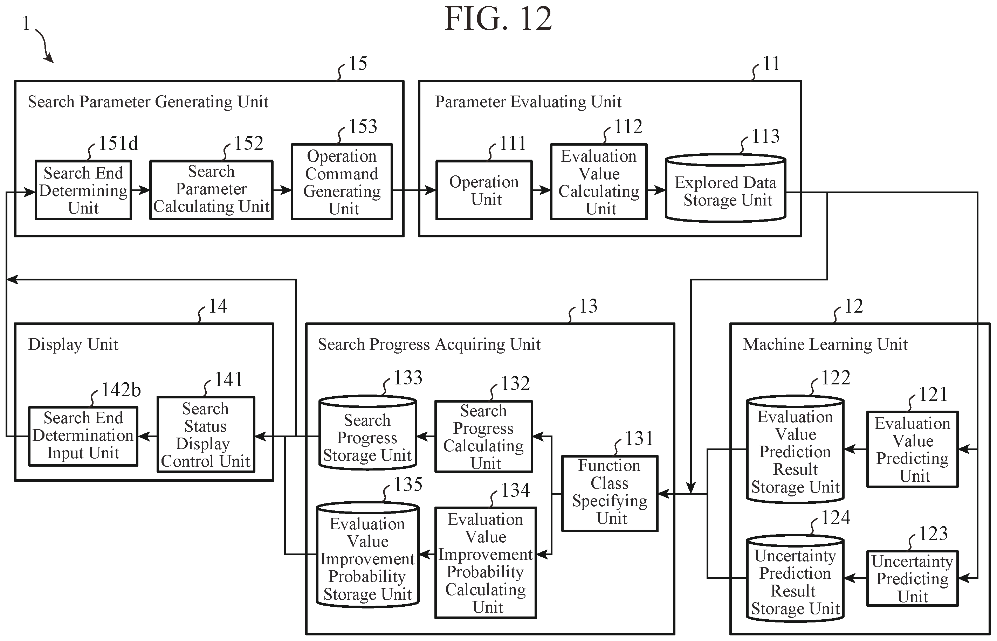

FIG. 12 is a diagram illustrating a configuration example of the parameter optimizing device 1 according to the fourth embodiment. In the parameter optimizing device 1 according to the fourth embodiment illustrated in FIG. 12, with respect to the parameter optimizing device 1 according to the third embodiment illustrated in FIG. 9, the configuration of the machine learning unit 12 is changed, an evaluation value improvement probability calculating unit 134 and an evaluation value improvement probability storage unit 135 are added to the search progress acquiring unit 13, and a search end determining unit 151c is changed to a search end determining unit 151d. Other component examples of the parameter optimizing device 1 according to the fourth embodiment illustrated in FIG. 12 are similar to the component example of the parameter optimizing device 1 according to the third embodiment illustrated in FIG. 9, and the same reference numerals are given thereto and only different portions are described.

As illustrated in FIG. 12, the machine learning unit 12 includes an evaluation value predicting unit 121, an evaluation value prediction result storage unit 122, an uncertainty predicting unit 123, and an uncertainty prediction result storage unit 124.

The evaluation value predicting unit 121 learns the relationship between the evaluation value and the parameter on the basis of the evaluation value acquired by the parameter evaluating unit 11 and the search point of the corresponding parameter, and predicts an evaluation value for a search candidate point of a parameter. The function of the evaluation value predicting unit 121 is similar to the function of the machine learning unit 12 in the third embodiment.

Information indicating the evaluation value predicted by the evaluation value predicting unit 121 and the search candidate point of the corresponding parameter is output to the evaluation value prediction result storage unit 122.

The evaluation value prediction result storage unit 122 stores the information indicating the evaluation value predicted by the evaluation value predicting unit 121 and the search candidate point of the corresponding parameter.

The information indicating the evaluation value and the search candidate point of the corresponding parameter stored in the evaluation value prediction result storage unit 122 is read by the search progress acquiring unit 13.

Note that FIG. 12 illustrates a case where the evaluation value prediction result storage unit 122 is provided inside the parameter optimizing device 1. However, it is not limited thereto, and the evaluation value prediction result storage unit 122 may be provided outside the parameter optimizing device 1.

The uncertainty predicting unit 123 predicts uncertainty for the prediction result by the machine learning unit 12 (evaluation value predicting unit 121) on the basis of the evaluation value acquired by the parameter evaluating unit 11 and the search point of the corresponding parameter.

Information indicating the uncertainty predicted by the uncertainty predicting unit 123 is output to the uncertainty prediction result storage unit 124.

The uncertainty prediction result storage unit 124 stores the information indicating the uncertainty predicted by the uncertainty predicting unit 123.

The information indicating the uncertainty stored in the uncertainty prediction result storage unit 124 is read by the search progress acquiring unit 13.

Note that FIG. 12 illustrates a case where the uncertainty prediction result storage unit 124 is provided inside the parameter optimizing device 1. However, it is not limited thereto, and the uncertainty prediction result storage unit 124 may be provided outside the parameter optimizing device 1.

Note that information indicating the function class specified by the function class specifying unit 131 in the fourth embodiment is output to the search progress calculating unit 132 and the evaluation value improvement probability calculating unit 134.

The evaluation value improvement probability calculating unit 134 calculates an improvement probability or an improvement probability and an improvement amount for updating the evaluation value on the basis of the evaluation value acquired by the parameter evaluating unit 11 and the search point of the corresponding parameter, the evaluation value predicted by the machine learning unit 12 and the search candidate point of the corresponding parameter, the uncertainty predicted by the machine learning unit 12, and the function class specified by the function class specifying unit 131.

Information indicating the improvement probability calculated by the evaluation value improvement probability calculating unit 134 or information indicating the improvement probability and the improvement amount is output to the evaluation value improvement probability storage unit 135.

The evaluation value improvement probability storage unit 135 stores the information indicating the improvement probability calculated by the evaluation value improvement probability calculating unit 134 or the information indicating the improvement probability and the improvement amount.

The information stored in the evaluation value improvement probability storage unit 135 is read by the display unit 14 and the search parameter generating unit 15.

Note that FIG. 12 illustrates a case where the evaluation value improvement probability storage unit 135 is provided inside the parameter optimizing device 1. However, it is not limited thereto, and the evaluation value improvement probability storage unit 135 may be provided outside the parameter optimizing device 1.

Further, the display unit 14 (search status display control unit 141) in the fourth embodiment displays progress information indicating the progress of the search on the basis of the acquisition result (in addition to the progress information indicating the progress of the search, the improvement probability, or the improvement probability and the improvement amount) by the search progress acquiring unit 13.

The search end determining unit 151d determines whether or not to end the search on the basis of the information indicating the setting of whether to automatically perform or manually perform the search end determination, and the acquisition result (at least one or more of the progress information indicating the progress of the search, the improvement probability, or the improvement probability and the improvement amount) by the search progress acquiring unit 13, or the input indicating whether or not to end the search received by the search end determination input unit 142b.

At this time, first, the search end determining unit 151d checks whether to automatically perform or manually perform the search end determination on the basis of the information indicating the setting of whether to automatically perform or manually perform the search end determination.

Here, when checking that the setting is to automatically perform the search end determination, the search end determining unit 151d determines whether or not to end the search on the basis of the acquisition result (at least one or more of the progress of the search, the improvement probability, or the improvement probability and the improvement amount) by the search progress acquiring unit 13.

On the other hand, when checking that the setting is to manually perform the search end determination, the search end determining unit 151d determines whether or not to end the search on the basis of the input indicating whether or not to end the search received by the display unit 14. That is, in this case, the search end determining unit 151d performs the above determination by an operation similar to the operation of the search end determining unit 151b in the second embodiment.

Note that, when the search end determining unit 151d determines not to end the search, that is, to continue the search, the search parameter calculating unit 152 according to the fourth embodiment determines a search point of a next parameter.

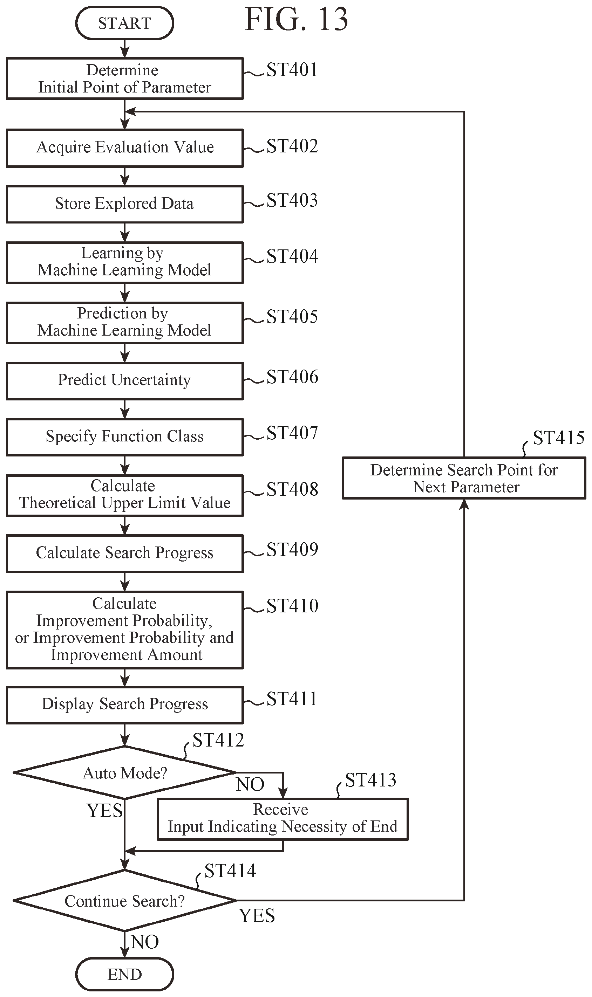

Next, an operation example of the parameter optimizing device 1 according to the fourth embodiment illustrated in FIG. 12 will be described with reference to FIG. 13.

In the operation example of the parameter optimizing device 1 according to the fourth embodiment illustrated in FIG. 12, for example, as illustrated in FIG. 13, the parameter optimizing device 1 first determines an initial point as a search point of a parameter (step ST401).

Next, the parameter evaluating unit 11 acquires an evaluation value for the search point of the parameter on the basis of the determined search point of the parameter (step ST402).

That is, first, the operation unit 111 causes an optimization target to operate at the search point of the parameter on the basis of the determined search point of the parameter. Next, the evaluation value calculating unit 112 calculates an evaluation value for the search point of the parameter used in the operation unit 111 on the basis of an operation result of the optimization target by the operation unit 111.

Next, the explored data storage unit 113 stores the evaluation value calculated by the evaluation value calculating unit 112 and information indicating the search point of the corresponding parameter as explored data (step ST403).

Next, the evaluation value predicting unit 121 learns the relationship between the evaluation value and the parameter by using the machine learning model on the basis of the evaluation value acquired by the parameter evaluating unit 11 and the search point of the corresponding parameter (step ST404).

Next, the evaluation value predicting unit 121 predicts an evaluation value for a search candidate point of the parameter by the machine learning model (step ST405).

Next, the uncertainty predicting unit 123 predicts the uncertainty for the prediction result by the machine learning unit 12 (evaluation value predicting unit 121) on the basis of the evaluation value acquired by the parameter evaluating unit 11 and the search point of the corresponding parameter (step ST406).

Next, the function class specifying unit 131 specifies the function class of the evaluation value on the basis of the evaluation value acquired by the parameter evaluating unit 11 and the search point of the corresponding parameter and the evaluation value predicted by the machine learning unit 12 and the search candidate point of the corresponding parameter (step ST407). At this time, the function class specifying unit 131 specifies the function class of the evaluation value from a set of function classes of which global optimality is guaranteed.

Next, the search progress calculating unit 132 calculates a theoretical upper limit value on the basis of the function class specified by the function class specifying unit 131 (step ST408).

Next, the search progress calculating unit 132 calculates the progress of the search on the basis of the evaluation value acquired by the parameter evaluating unit 11 and the corresponding parameter, the evaluation value predicted by the machine learning unit 12 and the search candidate point of the corresponding parameter, and the calculated theoretical upper limit value (step ST409).

Next, the evaluation value improvement probability calculating unit 134 calculates an improvement probability or an improvement probability and an improvement amount for updating the evaluation value on the basis of the evaluation value acquired by the parameter evaluating unit 11 and the search point of the corresponding parameter, the evaluation value predicted by the machine learning unit 12 and the search candidate point of the corresponding parameter, the uncertainty predicted by the machine learning unit 12, and the function class specified by the function class specifying unit 131 (step ST410).

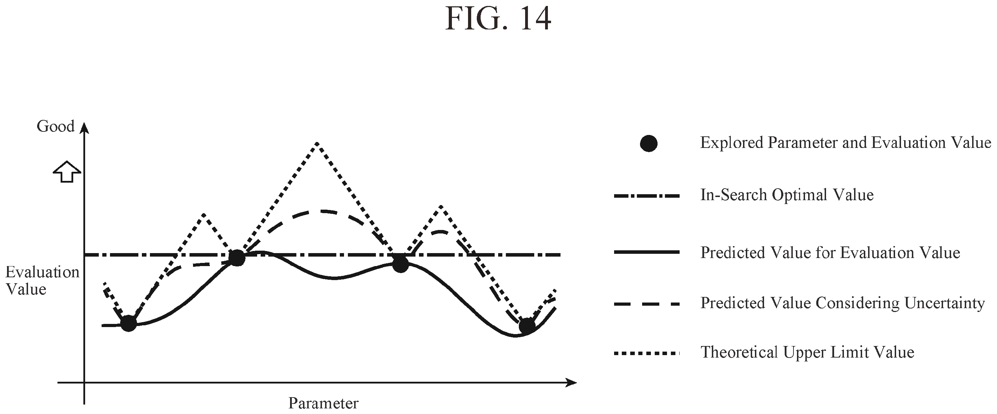

Here, for example, as indicated by a broken line in FIG. 14, an evaluation value (predicted value) predicted in consideration of uncertainty is obtained on the basis of the uncertainty predicted by the machine learning unit 12. Then, the evaluation value acquired by the parameter evaluating unit 11 and the evaluation value predicted by the machine learning unit 12 are compared with the evaluation value in consideration of the uncertainty, and it is conceivable that the improvement probability is high when the difference is large, and the improvement probability is low when the difference is small.

More specifically, for example, in a case where parameter optimization is performed by Bayesian optimization, when an average of prediction results of Gaussian process regression for search candidate points (x(hat)) of parameters is $\mu$(x(hat)), a standard deviation is $\sigma$(x(hat)), and an in-search optimal value obtained at a certain point of time is $y_{\text{best}}$, an improvement probability (P(x(hat))) is defined by the following Formula (15). The evaluation value improvement probability calculating unit 134 is only required to obtain an improvement probability for the next search point among them.

$$P(\hat{x}) = Pr(\text{f}(\hat{x}) \geqq y_{\text{best}}) = \phi(Z) \qquad (1\ 5)$$

In addition, the amount of improvement (PV) may be an expected improvement amount acquired from the following Formula (16), may be an improvement amount calculated from a theoretical upper limit value ($U_f$) and an in-search optimal value ($y_{\text{best}}$) as in the following Formula (17) or the following Formula (18), and is not limited thereto.

$$PV = E[\max(f(\hat{x}) - y_{\text{best}}, 0)] = (\mu(\hat{x}) - y_{\text{best}})\Phi(Z) + \sigma(\hat{x})\phi(Z) \qquad (1\ 6)$$

$$PV = \mu(\hat{x}) + 2\sigma(\hat{x}) - y_{\text{best}} \qquad (1\ 7)$$

$$PV = U_f(\hat{x}) - y_{\text{best}} \qquad (1\ 8)$$

Next, the search status display control unit 141 displays progress information indicating the progress of the search on the basis of the acquisition result (in addition to the progress information indicating the progress of the search, the improvement probability, or the improvement probability and the improvement amount) by the search progress acquiring unit 13 (step ST411).

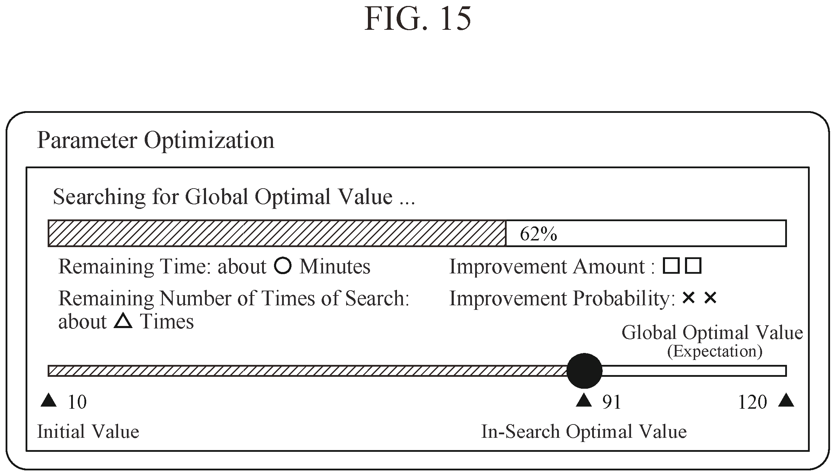

In the display unit 14 according to the fourth embodiment, for example, as illustrated in FIG. 15, the improvement probability of the evaluation value for the next search point is also displayed together with the display of the progress information indicating the progress of the search illustrated in FIG. 5. Further, in FIG. 15, the improvement amount is also displayed together with the above display.

Next, the search end determination input unit 142b checks whether the setting is to automatically perform the search end determination, that is, an auto mode on the basis of information indicating the setting of whether to automatically perform or manually perform the search end determination (step ST412).

In step ST412, when checking that the setting is not to automatically perform the search end determination, that is, the setting is to manually perform the search end determination, the search end determination input unit 142b receives an input indicating whether or not to end the search by the user (step ST413).

On the other hand, in step ST413, when the search end determination input unit 142b checks that the setting is to automatically perform the search end determination, the sequence proceeds to step ST414.

Next, the search end determining unit 151d determines whether or not to end the search on the basis of the information indicating the setting of whether to automatically perform or manually perform the search end determination, and the acquisition result (at least one or more of the progress information indicating the progress of the search, the improvement probability, or the improvement probability and the improvement amount) by the search progress acquiring unit 13, or the input indicating whether or not to end the search received by the search end determination input unit 142b (step ST414).

Here, when checking that the setting is to automatically perform the search end determination, the search end determining unit 151d determines whether or not to end the search on the basis of the acquisition result (at least one or more of the progress information indicating progress of the search, the improvement probability, or the improvement probability and the improvement amount) by the search progress acquiring unit 13.

On the other hand, when checking that the setting is to manually perform the search end determination, the search end determining unit 151d determines whether or not to end the search on the basis of the input indicating whether or not to end the search received by the display unit 14. That is, in this case, the search end determining unit 151d performs the above determination by an operation similar to the operation of the search end determining unit 151b in the second embodiment.

When the search end determining unit 151d determines to continue the search in step ST414, the search parameter calculating unit 152 determines a search point for the next parameter, and the operation command generating unit 153 generates a command value for the operation unit 111 on the basis of the parameter determined by the search parameter calculating unit 152 (step ST415). Thereafter, the sequence returns to step ST402. Thereafter, the parameter evaluating unit 11 repeats the above operation on the basis of the parameter included in the command value from the search parameter generating unit 15.

On the other hand, in step ST414, when the search end determining unit 151d determines not to continue the search, that is, determines to end the search, the sequence ends.

Note that, in the above description, a case has been described in which, with respect to the parameter optimizing device 1 according to the third embodiment, the configuration of the machine learning unit 12 is changed, the evaluation value improvement probability calculating unit 134 and the evaluation value improvement probability storage unit 135 are added to the search progress acquiring unit 13, and the search end determining unit 151c is changed to the search end determining unit 151d. However, it is not limited thereto, and, with respect to the parameter optimizing device 1 according to the first and second embodiments, the configuration of the machine learning unit 12 may be changed, the evaluation value improvement probability calculating unit 134 and the evaluation value improvement probability storage unit 135 may be added to the search progress acquiring unit 13, and the search end determining unit 151 or the search end determining unit 151b may be changed to the search end determining unit 151d, so that effects similar to those described above can be obtained.

As described above, according to the fourth embodiment, the machine learning unit 12 included in the information processing device includes the uncertainty predicting unit 123 to predict uncertainty for a prediction result by the machine learning unit 12 on the basis of the search point of the parameter and the evaluation value of the search point, and the search progress acquiring unit 13 includes an evaluation value improvement probability calculating unit 134 to calculate an improvement probability for updating an evaluation value on the basis of the search point, the evaluation value of the search point, the search candidate point, the evaluation value of the search candidate point predicted by the machine learning unit 12, the uncertainty predicted by the machine learning unit 12, and the function class specified by the function class specifying unit 131. Thus, the information processing device according to the fourth embodiment can grasp the improvement probability of the evaluation value for the next search point with respect to the first to third embodiments. As a result, in the information processing device according to the fourth embodiment, for example, even in a case where the search progress rate does not reach 100% or in a case where the remaining number of times of the search is not 0, it is possible to end the search for the parameter at an early stage in a case where an improvement prospect is small.

Note that, although the search progress acquiring unit 13 specifies the function class by the function class specifying unit 131 and calculates a theoretical upper limit value $U_f(x)$, a configuration without the function class specifying unit 131 may be employed. In this case, as the calculation of the theoretical upper limit value in step ST408, $U_f(x)$ that is the theoretical upper limit value can be calculated by the following Formula (19).

$$U_f(x) = \mu(x) + \kappa\sigma(x) \qquad (1\ 9)$$

Note that, in Formula (19), $\mu(x)$ is a predicted value of the evaluation value for the search candidate point of the parameter calculated by the evaluation value predicting unit 121. $\sigma(x)$ represents uncertainty for the prediction result by the evaluation value predicting unit 121, which is calculated by the uncertainty predicting unit 123. $\kappa$ is a hyperparameter, and for example, when $\kappa = 2$, it is about 95%, and when $\kappa = 3$, it is about 99.7%, which is a theoretical upper limit value considering uncertainty of prediction.

For the subsequent processing, the processing of step ST409 described above may be performed. Thus, it is possible to calculate the progress (this progress is not a limitation, but is an example of progress information) without using the function class specifying unit 131.

Note that it is not limited to the fourth embodiment, and the theoretical upper limit value calculated by the method may be used in other embodiments, and the theoretical upper limit value calculated by the method may be used in the calculation of the search situation. As a result, it is possible to calculate a value included in the progress described above without using the function class specifying unit 131.

Fifth Embodiment

In a fifth embodiment, a case where the optimization target is air-conditioning and cooling-heating equipment 2 will be described.

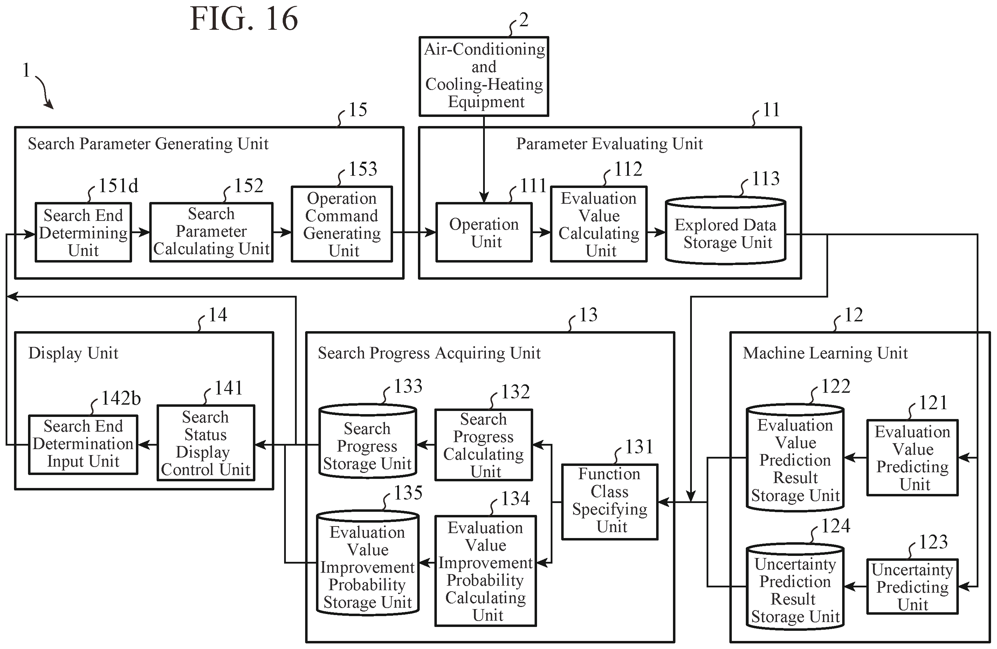

FIG. 16 is a diagram illustrating a configuration example of a parameter optimizing device 1 according to the fifth embodiment. A configuration example of the parameter optimizing device 1 according to the fifth embodiment illustrated in FIG. 16 is similar to the configuration example of the parameter optimizing device 1 according to the fourth embodiment illustrated in FIG. 12. On the other hand, in the parameter optimizing device 1 according to the fifth embodiment illustrated in FIG. 16, the air-conditioning and cooling-heating equipment 2 as an optimization target is connected to the parameter evaluating unit 11 (operation unit 111).

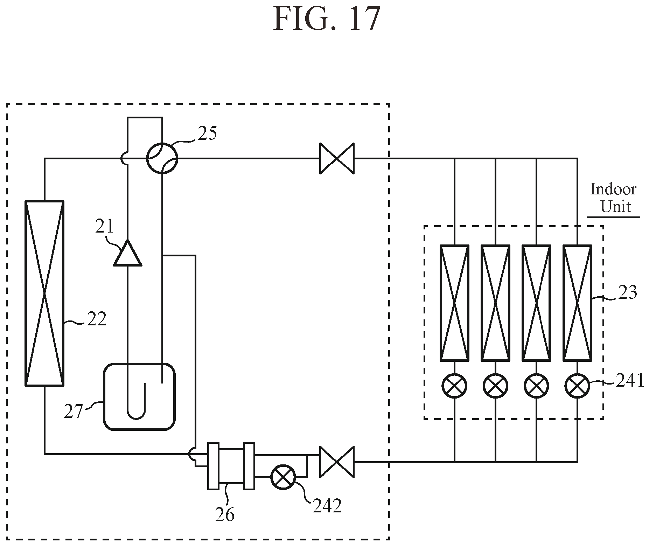

As the air-conditioning and cooling-heating equipment 2, for example, equipment for air conditioning, ventilation, or hygiene control, a freezer, or a water heater is targeted. As illustrated in FIG. 17, for example, the air-conditioning and cooling-heating equipment 2 includes at least a compressor 21 that conveys a refrigerant, a condenser 22 that releases heat of the refrigerant to a surrounding fluid, an evaporator 23 that absorbs the heat of the refrigerant from the surrounding fluid, and an expansion valve 24 that applies a pressure difference to the refrigerant. FIG. 17 illustrates a case where an electronic expansion valve 241 and an electronic expansion valve 242 for bypass are provided as the expansion valve 24.

Hereinafter, as illustrated in FIG. 17, the search operation will be described using, as an example, the air-conditioning and cooling-heating equipment 2 including a four-way valve 25, a refrigerant-refrigerant heat exchanger 26, and an accumulator 27 in addition to the four components of the compressor 21, the condenser 22, the evaporator 23, and the expansion valve 24. Hereinafter, in particular, a cooling mode in which a heat exchanger of an outdoor unit is the condenser 22 and a heat exchanger of an indoor unit is the evaporator 23 will be described.

For example, when cooling as illustrated in FIG. 17 is targeted, for the air-conditioning and cooling-heating equipment 2, parameters to be searched for include the opening degree of the electronic expansion valve 241 of the indoor unit, the frequency of the compressor 21 in the outdoor unit, and the opening degree of the electronic expansion valve 242 for bypass. Further, at least one of an opening degree of an electromagnetic valve, a fan air volume, a blowing angle of a vane, or a flow rate of water is included as a parameter.

In addition, as an evaluation value for determining whether a parameter is good or bad at the time of parameter search, at least one of COP indicating energy efficiency, cooling and heating capacity indicating how much a room can be heated or cooled, PMV as a comfort index, a blowout temperature, an outlet water temperature, or a $CO_2$ concentration is targeted.

For example, when it is desired to maximize COP in rated cooling, COP cannot be directly measured. Thus, the evaluation value calculating unit 112 calculates COP = rated capacity [kW]/rated power consumption [kW], and the parameter optimizing device 1 searches for a parameter that maximizes this value.

Further, the cooling and heating performance is generally obtained by measuring a heat balance (a difference in temperature and humidity between inlet air and outlet air, and an air volume) in the indoor unit.

In addition, the heat balance of the refrigerant may be predicted from physical property calculation of the refrigerant on the basis of each actuator or air temperature inside and outside the room.

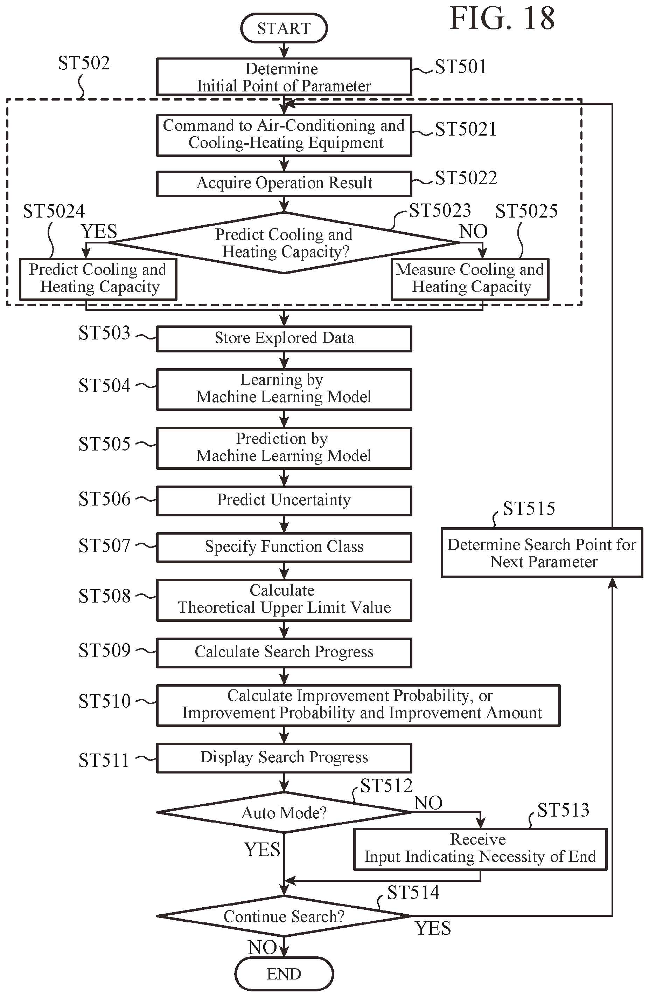

Next, an operation example of the parameter optimizing device 1 according to the fifth embodiment illustrated in FIG. 16 will be described with reference to FIG. 18.

In the operation example of the parameter optimizing device 1 according to the fifth embodiment illustrated in FIG. 16, for example, as illustrated in FIG. 18, the parameter optimizing device 1 first determines an initial point as a search point of a parameter (step ST501).

Next, the parameter evaluating unit 11 acquires an evaluation value for the search point of the parameter on the basis of the determined search point of the parameter (step ST502).

That is, first, the operation unit 111 operates the air-conditioning and cooling-heating equipment 2 at the search point of the parameter on the basis of the determined search point of the parameter. Next, the evaluation value calculating unit 112 calculates an evaluation value for the search point of the parameter used in the operation unit 111 on the basis of an operation result of the air-conditioning and cooling-heating equipment 2 by the operation unit 111.

At this time, the operation unit 111 transmits the determined search point of the parameter to the air-conditioning and cooling-heating equipment 2 via an air-conditioning controller (not illustrated) (step ST5021). Then, the air-conditioning and cooling-heating equipment 2 sets its own parameter in dependence on the transmitted search point of the parameter and operates.

The operation unit 111 then acquires the operation result of the air-conditioning and cooling-heating equipment 2 (step ST5022).

Further, the evaluation value calculating unit 112 determines whether or not to predict the cooling and heating capacity (step ST5023).

Then, when the evaluation value calculating unit 112 determines to predict the cooling and heating capacity in step ST5023, the evaluation value calculating unit 112 calculates the evaluation value by predicting the heat balance of the refrigerant on the basis of each actuator in the air-conditioning and cooling-heating equipment 2 or air temperature inside and outside the room, and predicting the cooling and heating capacity (step ST5024).

On the other hand, when the evaluation value calculating unit 112 determines not to predict the cooling and heating capacity in step ST5023, the evaluation value calculating unit 112 calculates the evaluation value by calculating the cooling and heating capacity on the basis of the difference in temperature and humidity between the inlet air and the outlet air and the air volume (step ST5025).

Next, the explored data storage unit 113 stores the evaluation value calculated by the evaluation value calculating unit 112 and information indicating the search point of the corresponding parameter as explored data (step ST503).

Next, the evaluation value predicting unit 121 learns the relationship between the evaluation value and the parameter by using the machine learning model on the basis of the evaluation value acquired by the parameter evaluating unit 11 and the search point of the corresponding parameter (step ST504).

Next, the evaluation value predicting unit 121 predicts an evaluation value for a search candidate point of the parameter by the machine learning model (step ST505).

Next, the uncertainty predicting unit 123 predicts the uncertainty for the prediction result by the machine learning unit 12 (evaluation value predicting unit 121) on the basis of the evaluation value acquired by the parameter evaluating unit 11 and the search point of the corresponding parameter (step ST506).

Next, the function class specifying unit 131 specifies the function class of the evaluation value on the basis of the evaluation value acquired by the parameter evaluating unit 11 and the search point of the corresponding parameter and the evaluation value predicted by the machine learning unit 12 and the search candidate point of the corresponding parameter (step ST507). At this time, the function class specifying unit 131 specifies the function class of the evaluation value from a set of function classes of which global optimality is guaranteed.

Next, the search progress calculating unit 132 calculates a theoretical upper limit value on the basis of the function class specified by the function class specifying unit 131 (step ST508).

Next, the search progress calculating unit 132 calculates the progress of the search on the basis of the evaluation value acquired by the parameter evaluating unit 11 and the corresponding parameter, the evaluation value predicted by the machine learning unit 12 and the search candidate point of the corresponding parameter, and the calculated theoretical upper limit value (step ST509).

Next, the evaluation value improvement probability calculating unit 134 calculates an improvement probability or an improvement probability and an improvement amount for updating the in-search optimal value on the basis of the evaluation value acquired by the parameter evaluating unit 11 and the search point of the corresponding parameter, the evaluation value predicted by the machine learning unit 12 and the search candidate point of the corresponding parameter, the uncertainty predicted by the machine learning unit 12, and the function class specified by the function class specifying unit 131 (step ST510).

Next, the search status display control unit 141 displays information indicating the progress of the search on the basis of the acquisition result (in addition to the progress of the search, the improvement probability, or the improvement probability and the improvement amount) by the search progress acquiring unit 13 (step ST511).

Next, the search end determination input unit 142b checks whether the setting is to automatically perform the search end determination, that is, an auto mode on the basis of information indicating the setting of whether to automatically perform or manually perform the search end determination (step ST512).

In step ST512, when checking that the setting is not to automatically perform the search end determination, that is, the setting is to manually perform the search end determination, the search end determination input unit 142b receives an input indicating whether or not to end the search by the user (step ST513).

On the other hand, in step ST513, when the search end determination input unit 142b checks that the setting is to automatically perform the search end determination, the sequence proceeds to step ST514.

Next, the search end determining unit 151d determines whether or not to end the search on the basis of the information indicating the setting of whether to automatically perform or manually perform the search end determination, and the acquisition result (at least one or more of the progress of the search, the improvement probability, or the improvement probability and the improvement amount) by the search progress acquiring unit 13, or the input indicating whether or not to end the search received by the search end determination input unit 142b (step ST514).

When the search end determining unit 151d determines to continue the search in step ST514, the search parameter calculating unit 152 determines a search point for the next parameter, and the operation command generating unit 153 generates a command value for the operation unit 111 on the basis of the parameter determined by the search parameter calculating unit 152 (step ST515). Thereafter, the sequence returns to step ST502. Thereafter, the parameter evaluating unit 11 repeats the above operation on the basis of the parameter included in the command value from the search parameter generating unit 15.

On the other hand, in step ST514, when the search end determining unit 151d determines not to continue the search, that is, determines to end the search, the sequence ends.

Note that, in the parameter optimizing device 1 according to the fourth embodiment, the case where the optimization target is the air-conditioning and cooling-heating equipment 2 has been described above. However, it is not limited thereto, and in the parameter optimizing device 1 according to the first to third embodiments, the optimization target may be the air-conditioning and cooling-heating equipment 2, and effects similar to those described above can be obtained.

As described above, according to the fifth embodiment, the optimization target in the parameter optimizing device 1 is the air-conditioning and cooling-heating equipment 2. Thus, the parameter optimizing device 1 according to the fifth embodiment can determine a parameter that maximizes or minimizes, for example, the cooling and heating capacity, the energy efficiency, or the power consumption in the air-conditioning and cooling-heating equipment 2. As a result, in the parameter optimizing device 1 according to the fifth embodiment, it is possible to provide the air-conditioning and cooling-heating equipment 2 with high operation efficiency.

Note that free combinations of the individual embodiments, modifications of any components of the individual embodiments, or omissions of any components in the individual embodiments are possible.

INDUSTRIAL APPLICABILITY

The present disclosure is suitable for use in an information processing device, an information processing method, a program, a display device, a display method, and the like.

REFERENCE SIGNS LIST

1: Parameter optimizing device, 2: Air-conditioning and cooling-heating equipment, 11: Parameter evaluating unit, 12: Machine learning unit, 13: Search progress acquiring unit, 14: Display unit, 15: Search parameter generating unit, 21: Compressor, 22: Condenser, 23: Evaporator, 24: Expansion valve, 25: Four-way valve, 26: Refrigerant-refrigerant heat exchanger, 27: Accumulator, 101: Display, 102: Processing circuitry, 103: Communication interface, 104: Memory, 105: Storage medium, 111: Operation unit, 112: Evaluation value calculating unit, 113: Explored data storage unit, 121: Evaluation value predicting unit, 122: Evaluation value prediction result storage unit, 123: Uncertainty predicting unit, 124: Uncertainty prediction result storage unit, 131: Function class specifying unit, 132: Search progress calculating unit, 133: Search progress storage unit, 134: Evaluation value improvement probability calculating unit, 135: Evaluation value improvement probability storage unit, 141: Search status display control unit, 142 and 142b: Search end determination input unit, 151, 151b, 151c, and 151d: Search end determining unit, 152: Search parameter calculating unit, 153: Operation command generating unit, 241: Electronic expansion valve, 242: Electronic expansion valve for bypass

**Claims**

1. An information processing device comprising:

a machine learning unit to learn, on a basis of a search point of a parameter and an evaluation value of the search point, a relationship between the evaluation value and the parameter, and predict the evaluation value for a search candidate point of the parameter; and

a search progress acquiring unit to acquire progress information indicating progress of a search on a basis of the search point, the evaluation value of the search point, the search candidate point, and the evaluation value of the search candidate point predicted by the machine learning unit.

2. The information processing device according to claim 1, comprising
a parameter evaluating unit to acquire the evaluation value of the search point on a basis of the search point that has been determined.

3. The information processing device according to claim 1 or 2, comprising
a search parameter generating unit to determine a next search point, which is a search point for a parameter to be searched for next, on a basis of the progress information acquired by the search progress acquiring unit, on a basis of whether or not an input indicating that the search for the parameter is to be ended based on the progress information is made by a user, or on a basis of whether or not an input indicating that the search for the parameter is to be continued is made by a user.

4. The information processing device according to claim 3, comprising
a parameter evaluating unit including an operation unit to cause a target to operate at the determined next search point, and an evaluation value calculating unit to calculate an evaluation value of the next search point on a basis of an operation result by the operation unit.

5. The information processing device according to any one of claims 1 to 4, comprising
an output control unit to perform control to output the acquired progress information to a display unit.

6. The information processing device according to claim 5, comprising the display unit.

7. The information processing device according to claim 6, wherein
the display unit displays information for receiving an input for ending a search.

8. The information processing device according to any one of claims 1 to 7, wherein
the search progress acquiring unit includes:

a function class specifying unit to specify a function class of an evaluation value from a set of function classes on a basis of the search point, the evaluation value of the search point, the search candidate point, and the evaluation value of the search candidate point predicted by the machine learning unit; and
a search progress calculating unit to calculate the progress of the search on a basis of the search point, the evaluation value of the search point, the search candidate point, the evaluation value of the search candidate point predicted by the machine learning unit, and the function class.

9. The information processing device according to claim 8, wherein
the function class is a function of which global optimality is guaranteed.

10. The information processing device according to claim 8 or 9, wherein

the machine learning unit includes an uncertainty predicting unit to predict uncertainty for a prediction result by the machine learning unit on a basis of the search point of the parameter and the evaluation value of the search point, and
the search progress acquiring unit includes an evaluation value improvement probability calculating unit to calculate an improvement probability for updating an evaluation value on a basis of the search point, the evaluation value of the search point, the search candidate point, the evaluation value of the search candidate point predicted by the machine learning unit, the uncertainty predicted by the machine learning unit, and the function class specified by the function class specifying unit.

11. An information processing method comprising:

a step of learning, on a basis of a search point of a parameter and an evaluation value of the search point, a relationship between the evaluation value and the parameter, and predicting, by a machine learning unit, the evaluation value for a search candidate point of the parameter; and
a step of acquiring, by a search progress acquiring unit, progress information indicating progress of a search on a basis of the search point, the evaluation value of the search point, the search candidate point, and the evaluation value of the search candidate point predicted by the machine learning unit.

12. A program for causing a computer to execute:

processing of learning, on a basis of a search point of a parameter and an evaluation value of the search point, a relationship between the evaluation value and the parameter, and predicting the evaluation value for a search candidate point of the parameter; and
processing of acquiring progress information indicating progress of a search on a basis of the search point, the evaluation value of the search point, the search candidate point, and the predicted evaluation value of the search candidate point.

13. A display device comprising:

an acquiring unit to acquire progress information indicating progress of a search for an optimal parameter by a parameter optimizing device that evaluates a parameter of an optimization target and searches for the optimal parameter; and
a display unit to display the progress information.

14. The display device according to claim 13, wherein,
on a basis of a search point of the parameter that has been determined, an evaluation value for the search point is acquired by the parameter optimizing device, a relationship between the evaluation value and the parameter is learned by the parameter optimizing device on a basis of the search point and the evaluation value of the search point, the evaluation value for a search candidate point of the parameter is predicted by the parameter optimizing device on a basis of the learned relationship, and the acquiring unit acquires the progress information calculated by the parameter optimizing device on a basis of the search point, the evaluation value of the search point, the search candidate point, and the predicted evaluation value of the search candidate point.

15. The display device according to claim 13 or 14, wherein

the progress information includes information indicating the progress of the search for the search point of the parameter, and
the display unit displays information indicating the progress of the search for the search point.

16. The display device according to any one of claims 13 to 15, wherein

the progress information includes information indicating the progress based on an in-search optimal value among evaluation values, each of which is the evaluation value found by the parameter optimizing device, and the evaluation value expected to be maximum in the entire search by the parameter optimizing device, and
the display unit displays the information indicating the progress based on an in-search optimal value among evaluation values, each of which is the evaluation value found by the parameter optimizing device, and the evaluation value expected to be maximum in the entire search by the parameter optimizing device.

17. The display device according to any one of claims 13 to 16, wherein

the progress information includes information indicating a ratio at which the search for the parameter is ended in the entire search for the parameter, and
the display unit displays information indicating the ratio at which the search for the parameter is ended.

18. The display device according to any one of claims 13 to 17, wherein

the progress information includes information regarding a search end of the parameter search, and
the display unit displays information regarding the search end.

19. The display device according to claim 18, wherein
the information regarding the search end includes a remaining time until the parameter search is ended or an end time of the parameter search on a basis of the progress information.

20. The display device according to any one of claims 13 to 19, wherein

the progress information includes information regarding a remaining number of times of the search of the parameter search, and
the display unit displays information regarding the remaining number of times of the search.

21. The display device according to any one of claims 13 to 20, wherein

the progress information includes an in-search optimal value among evaluation values, each of which is the evaluation value found by the parameter optimizing device, and
the display unit displays the in-search optimal value.

22. The display device according to any one of claims 13 to 21, wherein

the progress information includes information indicating the evaluation value expected to be maximum by the parameter optimizing device in the entire search by the parameter optimizing device, and
the display unit displays information indicating the evaluation value expected to be maximum.

23. The display device according to claim 22, wherein

the progress information includes information indicating a ratio of the in-search optimal value to the evaluation value expected to be maximum, and
the display unit displays the information indicating a ratio of the in-search optimal value to the evaluation value expected to be maximum on a basis of the progress information.

24. The display device according to any one of claims 13 to 23, wherein
the display unit displays information of receiving an input of end of the search by the parameter optimizing device or an input of continuation of the search.

25. The display device according to any one of claims 13 to 24, wherein
the display unit displays information for setting whether the end of the search by the parameter optimizing device is determined by a user or by the parameter optimizing device.

26. A display method comprising:

a step of acquiring, by an acquiring unit, progress information indicating progress of a search for an optimal parameter by a parameter optimizing device that evaluates a parameter of an optimization target and searches for the optimal parameter; and
a step of displaying the progress information by a display unit.

27. A program for causing a computer to execute:

processing of acquiring progress information indicating progress of a search for an optimal parameter by a parameter optimizing device that evaluates a parameter of an optimization target and searches for the optimal parameter; and
processing of displaying the progress information.

# FIG. 1

# FIG. 2

Parameter Optimizing Device — 1

- 101 Display
- 102 Processing Circuitry
- 103 Communication Interface
- 104 Memory
- 105 Storage Medium

# FIG. 3

```
                    ┌─────────────┐
                    │    START    │
                    └──────┬──────┘
                           │
              ┌────────────▼────────────┐
              │        Determine        │ ⌒ST101
              │ Initial Point of Parameter │
              └────────────┬────────────┘
                           │
              ┌────────────▼────────────┐
              │  Acquire Evaluation Value │ ⌒ST102
              └────────────┬────────────┘
                           │
              ┌────────────▼────────────┐
              │    Store Explored Data   │ ⌒ST103
              └────────────┬────────────┘
                           │
              ┌────────────▼────────────┐
              │       Learning by       │ ⌒ST104
              │  Machine Learning Model  │
              └────────────┬────────────┘
                           │
              ┌────────────▼────────────┐
              │      Prediction by      │ ⌒ST105
              │  Machine Learning Model  │
              └────────────┬────────────┘
                           │
              ┌────────────▼────────────┐          ⌒ST111
              │  Specify Function Class  │ ⌒ST106   ┌──────────────────────────┐
              └────────────┬────────────┘          │ Determine Search Point for │
                           │                        │     Next Parameter        │
              ┌────────────▼────────────┐           └──────────────────────────┘
              │        Calculate        │ ⌒ST107
              │ Theoretical Upper Limit Value │
              └────────────┬────────────┘
                           │
              ┌────────────▼────────────┐
              │ Calculate Search Progress │ ⌒ST108
              └────────────┬────────────┘
                           │
              ┌────────────▼────────────┐
              │  Display Search Progress │ ⌒ST109
              └────────────┬────────────┘
                           │        ⌒ST110
                      ◇────▼────◇
                     ◇ Continue  ◇────── YES
                     ◇  Search? ◇
                      ◇─────────◇
                           │ NO
                    ┌──────▼──────┐
                    │     END     │
                    └─────────────┘
```

FIG. 4

# FIG. 5

Parameter Optimization

Searching for Global Optimal Value ...

| 62% |

Remaining Time: about ◯ Minutes
Remaining Number of Times of Search: about △ Times

Global Optimal Value
(Expectation)

▲ 10    ▲ 91    120 ▲

Initial Value    In-Search Optimal Value

1401
1403
1405
1402
1404
1406

# FIG. 6

# FIG. 7

```
              ( START )
                  │
                  ▼
   ┌─────────────────────────────┐
   │          Determine          │ ～ST201
   │   Initial Point of Parameter│
   └─────────────────────────────┘
                  │
                  ▼ ◄──────────────────────────────────┐
   ┌─────────────────────────────┐                     │
   │    Acquire Evaluation Value │ ～ST202              │
   └─────────────────────────────┘                     │
                  │                                     │
                  ▼                                     │
   ┌─────────────────────────────┐                     │
   │      Store Explored Data    │ ～ST203              │
   └─────────────────────────────┘                     │
                  │                                     │
                  ▼                                     │
   ┌─────────────────────────────┐                     │
   │          Learning by        │ ～ST204              │
   │    Machine Learning Model   │                     │
   └─────────────────────────────┘                     │
                  │                                     │
                  ▼                                     │
   ┌─────────────────────────────┐                     │
   │         Prediction by       │ ～ST205              │
   │    Machine Learning Model   │              ST212   │
   └─────────────────────────────┘            ┌─────────────────────────┐
                  │                            │  Determine Search Point │
                  ▼                            │   for Next Parameter    │
   ┌─────────────────────────────┐ ～ST206    └─────────────────────────┘
   │     Specify Function Class  │                     ▲
   └─────────────────────────────┘                     │
                  │                                     │
                  ▼                                     │
   ┌─────────────────────────────┐                     │
   │          Calculate          │ ～ST207              │
   │  Theoretical Upper Limit Value│                   │
   └─────────────────────────────┘                     │
                  │                                     │
                  ▼                                     │
   ┌─────────────────────────────┐                     │
   │   Calculate Search Progress │ ～ST208              │
   └─────────────────────────────┘                     │
                  │                                     │
                  ▼                                     │
   ┌─────────────────────────────┐                     │
   │    Display Search Progress  │ ～ST209              │
   └─────────────────────────────┘                     │
                  │                                     │
                  ▼                                     │
   ┌─────────────────────────────┐                     │
   │          Receive            │ ～ST210              │
   │ Input Indicating Necessity of End│                │
   └─────────────────────────────┘                     │
                  │              ST211                  │
                  ▼             ╱                       │
              ◇─────────────◇                          │
             ╱ Continue Search?╲───────────────────────┘
              ◇─────────────◇        YES
                  │NO
                  ▼
              ( END )
```

FIG. 8

End Determination

| Continue Search | End Search |

# FIG. 9

# FIG. 10

START

Determine
Initial Point of Parameter — ST301

Acquire Evaluation Value — ST302

Store Explored Data — ST303

Learning by
Machine Learning Model — ST304

Prediction by
Machine Learning Model — ST305

Specify Function Class — ST306

Calculate
Theoretical Upper Limit Value — ST307

Calculate Search Progress — ST308

Display Search Progress — ST309

ST310
Auto Mode?

NO

ST311
Receive
Input Indicating Necessity of End

YES

ST312
Continue Search?

YES

ST313
Determine
Search Point for Next Parameter

NO

END

# FIG. 11

☐ Manual Mode

End Determination

Continue Search      End Search

☑ Auto Mode

## FIG. 12

**1**

**15** Search Parameter Generating Unit
- **151d** Search End Determining Unit
- **152** Search Parameter Calculating Unit
- **153** Operation Command Generating Unit

**11** Parameter Evaluating Unit
- **111** Operation Unit
- **112** Evaluation Value Calculating Unit
- **113** Explored Data Storage Unit

**12** Machine Learning Unit
- **121** Evaluation Value Predicting Unit
- **122** Evaluation Value Prediction Result Storage Unit
- **123** Uncertainty Predicting Unit
- **124** Uncertainty Prediction Result Storage Unit

**13** Search Progress Acquiring Unit
- **131** Function Class Specifying Unit
- **132** Search Progress Calculating Unit
- **133** Search Progress Storage Unit
- **134** Evaluation Value Improvement Probability Calculating Unit
- **135** Evaluation Value Improvement Probability Storage Unit

**14** Display Unit
- **141** Search Status Display Control Unit
- **142b** Search End Determination Input Unit

# FIG. 13

START

Determine
Initial Point of Parameter — ST401

Acquire Evaluation Value — ST402

Store Explored Data — ST403

Learning by
Machine Learning Model — ST404

Prediction by
Machine Learning Model — ST405

Predict Uncertainty — ST406

Specify Function Class — ST407

Calculate
Theoretical Upper Limit Value — ST408

Calculate Search Progress — ST409

Calculate
Improvement Probability,
or Improvement Probability and
Improvement Amount — ST410

Display Search Progress — ST411

ST412
Auto Mode?

NO
ST413
Receive
Input Indicating Necessity of End

YES

ST414
Continue Search?

YES

NO

END

ST415
Determine Search Point for
Next Parameter

# FIG. 14

Legend:
- ● Explored Parameter and Evaluation Value
- —·—·— In-Search Optimal Value
- ——— Predicted Value for Evaluation Value
- — — — Predicted Value Considering Uncertainty
- ········· Theoretical Upper Limit Value

Vertical axis: Good / Evaluation Value

Horizontal axis: Parameter

# FIG. 15

Parameter Optimization

Searching for Global Optimal Value ...

| ///////////////////////////////// | 62% |

Remaining Time: about ○ Minutes          Improvement Amount : □ □

Remaining Number of Times of Search:      Improvement Probability: ✕ ✕
about △ Times

Global Optimal Value
(Expectation)

▲ 10                          ▲ 91                120 ▲

Initial Value                In-Search Optimal Value

EP 4 783 079 A1

## FIG. 16

EP 4 783 079 A1

# FIG. 17

FIG. 18

```
                           ( START )
                               │
                               ▼
ST502              ┌───────────────────────────┐
  ┌ ─ ─ ─ ─ ─ ─ ─ ─│     Determine             │~ST501
  |                 │ Initial Point of Parameter│
  |                 └───────────────────────────┘
  |                            │
  |                            ▼
  |                 ┌───────────────────────────┐
  |                 │ Command to Air-Conditioning│~ST5021
  |                 │ and Cooling-Heating Equipment│
  |                 └───────────────────────────┘
  |                            │
  |                            ▼
  |                 ┌───────────────────────────┐
  |                 │   Acquire Operation Result │~ST5022
  |                 └───────────────────────────┘
  |                            │
  |   ST5024                   ▼            ST5023   ST5025
  |      YES            ◇ Predict Cooling and ◇   NO
  | ┌──────────────┐     Heating Capacity?      ┌──────────────┐
  | │Predict Cooling│                           │Measure Cooling│
  | │ and Heating   │                           │ and Heating   │
  | │  Capacity     │                           │  Capacity     │
  | └──────────────┘                            └──────────────┘
  └ ─ ─ ─ ─ ─ ─ ─ ─ ─ ─ ─ ─ ─ ─ ─ ─ ─ ─ ─ ─ ─ ─
                               ▼
ST503~           ┌───────────────────────────┐
                 │     Store Explored Data    │
                 └───────────────────────────┘
                               ▼
ST504~           ┌───────────────────────────┐
                 │  Learning by Machine Learning Model │
                 └───────────────────────────┘
                               ▼
ST505~           ┌───────────────────────────┐
                 │ Prediction by Machine Learning Model │
                 └───────────────────────────┘
                               ▼
ST506~           ┌───────────────────────────┐
                 │     Predict Uncertainty    │
                 └───────────────────────────┘
                               ▼
ST507~           ┌───────────────────────────┐          ST515
                 │   Specify Function Class   │    ┌──────────────────┐
                 └───────────────────────────┘    │ Determine Search  │
                               ▼                   │ Point for Next    │
ST508~           ┌───────────────────────────┐    │   Parameter       │
                 │ Calculate Theoretical Upper │    └──────────────────┘
                 │      Limit Value           │
                 └───────────────────────────┘
                               ▼
ST509~           ┌───────────────────────────┐
                 │  Calculate Search Progress │
                 └───────────────────────────┘
                               ▼
ST510~           ┌────────────────────────────────────────┐
                 │ Calculate Improvement Probability, or   │
                 │ Improvement Probability and Improvement │
                 │              Amount                     │
                 └────────────────────────────────────────┘
                               ▼
ST511~           ┌───────────────────────────┐
                 │   Display Search Progress  │
                 └───────────────────────────┘
                               ▼                ST512
                        ◇ Auto Mode? ◇          NO      ST513
                               │                  ┌──────────────────────┐
                              YES                 │ Receive Input        │
                               │                  │ Indicating Necessity │
                               │                  │       of End         │
                               │                  └──────────────────────┘
                               ▼        ST514
                     ◇ Continue Search? ◇   YES
                               │
                              NO
                               ▼
                           (  END  )
```

## INTERNATIONAL SEARCH REPORT

| International application No. |
| --- |
| **PCT/JP2023/038818** |

| A. | CLASSIFICATION OF SUBJECT MATTER |
| --- | --- |

***G06N 99/00***(2019.01)i
FI: G06N99/00 180

According to International Patent Classification (IPC) or to both national classification and IPC

| B. | FIELDS SEARCHED |
| --- | --- |

Minimum documentation searched (classification system followed by classification symbols)

G06N99/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2021-174078 A (HITACHI, LTD.) 01 November 2021 (2021-11-01) claims 1, 11, paragraph [0086] | 13-27 |
| Y | | 1-7, 11-12 |
| A | | 8-10 |
| Y | WO 2020/075316 A1 (MITSUBISHI ELECTRIC CORPORATION) 16 April 2020 (2020-04-16) paragraphs [0033], [0180]-[0185] | 1-7, 11-12 |
| Y | WO 2016/203531 A1 (HITACHI, LTD.) 22 December 2016 (2016-12-22) paragraph [0056] | 3-4, 7 |
| A | JP 2003-283198 A (JUKI CORP.) 03 October 2003 (2003-10-03) paragraphs [0031]-[0033], [0041]-[0042] | 1-27 |
| A | JP 2017-122981 A (HITACHI, LTD.) 13 July 2017 (2017-07-13) paragraphs [0047]-[0048] | 1-27 |

☑ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 January 2024** | **16 January 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**EP 4 783 079 A1**

## INTERNATIONAL SEARCH REPORT

International application No.

**PCT/JP2023/038818**

### C. DOCUMENTS CONSIDERED TO BE RELEVANT

| Category* | Citation of document, with indication, where appropriate, of the relevant passages | Relevant to claim No. |
|---|---|---|
| A | JP 2010-146068 A (HITACHI, LTD.) 01 July 2010 (2010-07-01)<br>paragraphs [0102]-[0103] | 1-27 |
| A | WO 2020/261572 A1 (MITSUBISHI ELECTRIC CORPORATION) 30 December 2020 (2020-12-30)<br>paragraphs [0013]-[0068] | 1-27 |

Form PCT/ISA/210 (second sheet) (July 2022)

45

## INTERNATIONAL SEARCH REPORT
### Information on patent family members

International application No.

**PCT/JP2023/038818**

| Patent document cited in search report | Publication date (day/month/year) | Patent family member(s) | Publication date (day/month/year) |
|---|---|---|---|
| JP 2021-174078 A | 01 November 2021 | (Family: none) | |
| WO 2020/075316 A1 | 16 April 2020 | US 2022/0004160 A1 paragraphs [0051], [0163]-[0168] KR 10-2021-0042994 A CN 112805653 A | |
| WO 2016/203531 A1 | 22 December 2016 | (Family: none) | |
| JP 2003-283198 A | 03 October 2003 | (Family: none) | |
| JP 2017-122981 A | 13 July 2017 | (Family: none) | |
| JP 2010-146068 A | 01 July 2010 | (Family: none) | |
| WO 2020/261572 A1 | 30 December 2020 | US 2022/0107629 A1 paragraphs [0017]-[0070] KR 10-2022-0002679 A CN 114025912 A | |

Form PCT/ISA/210 (patent family annex) (July 2022)

**REFERENCES CITED IN THE DESCRIPTION**

**Patent documents cited in the description**

- WO 2021024396 A1